# EUROPEAN PATENT APPLICATION

(11) **EP 4 570 986 A2**
(43) Date of publication of application: **18.06.2025**
(21) Application number: 25172534.7
(22) Date of filing: 29.08.2022
(51) Int. Cl.: D21B 1/36

(54) **PROCESS FOR THE PRODUCTION OF WOOD FIBERBOARD**

(30) Priority: 31.08.2021 BE 202105685; 04.04.2022 BE 202205252; 24.05.2022 BE 202205402
(62) Divisional of application: 22764892.0
(71) Applicant: Unilin, BV, 8710 Wielsbeke (BE)
(72) Inventor: Coudenys, Geert, 9880 Lotenhulle (BE); Hoflack, Veronique, 5332 Crupet (BE); Vangheluwe, Lieven, 9600 Ronse (BE)
(74) Representative: Unilin Technologies

(57) **Abstract**

The process for the production of wood fiberboard comprises the step in which refined material from recycled wood fiberboards is wetted, heated and pressurized using steam; the step in which this material is kept under pressure and temperature for a certain amount of time, followed by the step of reducing the pressure of this material by at least 3 bar. After this pressure reduction, the material is transformed into recycled wood fibers, possibly with a fraction of wood fiber clumps and any other impurities. The recycled wood fibers are supplied as feedstock in a production line for producing wood fiberboard.

## Description

The invention relates to a process for the production of wood fiberboard - for example of MDF (Medium Density Fiberboard) or of HDF (High Density Fiberboard) or of softboard or of hardboard - in which wood fibers obtained from recycling wood fiberboard - for example from recycling MDF (Medium Density Fiberboard) and/or from recycling HDF (High Density Fiberboard) boards and/or from recycling softboard and/or from recycling hardboard - are used, at least to some extent, as feedstock.

WO2011/077155A1 describes a method for recycling "engineered wood panels", such as wood fiberboards, wherein wood fibers are recovered which can be used as a substitute for new wood fibers. The boards or panels are broken down mechanically and mixed with water in order to form a slurry. This slurry is then heated by passing an electrical current through the slurry. This heating causes a reduction in the strength of the bonds between the wood fibers. This heating may take place above atmospheric pressure. After heating, it is possible to rapidly depressurize the slurry, for example by spraying it via a valve, to dry it and to separate the fibers from one another. An apparatus is described for carrying out the method as a continuous process.

It is a drawback of this method that the adhesive from the boards dissolves in the bath in which the slurry is heated. This may lead to saturation of the bath, as a result of which the bonds are no longer detached, or the electrical conductivity of the slurry - necessary for heating via the Joule effect - may change. Additives which are necessary to adjust the electrical conductivity may also cause problems.

US2003/0056873A1 describes a process for producing wood fiberboards - via recycling of waste from composite wood products - by means of a conventional dry production process for producing wood fiberboards. The process employs a modified treatment in a pre-heater, followed by mechanical refining in a "refiner", resulting in recycled fibers. These recycled fibers then constitute at least 20 percent by weight of the fiberboards produced. In the pre-heater, the recycled wood products are chemically treated under pressure in the presence of steam. It is a drawback of this process that chemicals have to be added in the pre-heater. This may result in corrosion problems. These chemicals also lead to contaminated waste streams which have to be treated in a suitable manner. These chemicals may also have a negative influence on the fiber quality.

DE4224629 describes a process for recycling board-shaped elements made of wood products with or without a plastic coating which are glued together by means of urea-formaldehyde binder. The process relates in particular to the recycling of wood fiberboards and chipboards. The board-shaped elements are broken into small fragments in a pretreatment step. These fragments are treated in a water vapor atmosphere for a certain amount of time - preferably in a saturated water vapor atmosphere - under high pressure and high temperature. As a result thereof, the fragments are transformed into fibrous, chip-like or platelet-like feedstock which is glued to form new board-shaped elements. To this end, the recycled fibrous, chip-like or platelet-like feedstock may be treated with adhesive. Alternatively, chemically modified adhesive may be used, more specifically the urea-formaldehyde adhesive residues which are still attached to the recycled fibrous, chip-like or platelet-like feedstock.

US5,804,035 describes a process for recovering chips and fibers from waste of wood products, old furniture, production waste, wood products glued together with urea-formaldehyde binders or with other binders which may be hydrolyzed or chemically broken down. These materials are treated at high temperature. **In** a first step of the process, these materials are impregnated with an impregnating liquid, as a result of which these materials absorb at least 50% of their weight in impregnating liquid. **In** a second step, heating to between 80 and 120°C is performed. The materials disintegrated in this way are then sorted by means of sieving or other techniques.

WO2003/026859 - by the same applicants and inventors as US5,804,035 - describes a process similar to that in US5,804,035, but which is more economical.

It is a drawback of these processes that a mixture of wood fibers and wood chips is obtained which does not make it possible to produce high-quality products, since the production of high-quality products requires feedstock with uniform properties.

WO2005/007968A1 relates to a method for recovering wood constituents from a board material consisting of a matrix of lignocellulose material bonded by glue. The method comprises treating the material with a combination of electromagnetic radiation and soaking or immersing it in a liquid medium, and recovering constituents. It is a drawback that special equipment is required to generate the electromagnetic radiation to heat the material, and that it is more difficult to incorporate such a process in a continuous process.

WO00/01877 describes a process and an apparatus for treating and recovering wood fiberboard waste and chipboard waste. Wood fiberboard waste and chipboard waste is introduced into a steam chamber and treated with pressurized steam. At the end of the steam treatment, the excess of steam is discharged from the steam chamber and the steam-treated waste is passed through a rotating drum. Wood fibers and chips pass through the screens of the drum and are collected for drying and further processing. Waste, such as melamine coatings, is collected and discharged. The collected wood fibers and wood chips may be processed for use in the production of paper, cardboard or chipboard, or as material to cover soil.

US3741863 relates to a method for producing boards using recycled waste cellulose products. The method comprises the following steps: comminuting the waste material to produce small pieces, drying these small pieces to at least 85 percent solids in order to remove excess moisture and to sterilize the small pieces, separating off the dried cellulose waste products from the non-cellulose waste, heating the small cellulose pieces in the presence of a non-flammable medium in order to increase the temperature of the small pieces and to sterilize the small pieces, mechanically refining the heated small cellulose pieces, separating off the fibers and fiber bundles from the non-flammable medium, adding a resin to the fibers and the fiber bundles and mixing them intimately, forming a mat from the fibers and the fiber bundles; and pressing this mat under heat and pressure to form a board.

WO01/39946A1 describes a process for producing fiberboards via recycling of waste of composite wood products by means of a conventional continuous dry wood fiberboard process, wherein the process in the pre-heater and/or in the refiner is modified. These modifications ensure that fiberboards comprising at least 20 percent by weight of recycled fibers can be produced.

It is a problem of the recycling methods from the prior art for recycling MDF and HDF boards that they require complicated equipment, that they are difficult to incorporate in existing production processes for chipboard, MDF or HDF boards, they are not economically cost-effective and they do not result in the required and continuous good quality of boards produced using the recovered material.

It is an object of the invention to offer a solution to shortcomings in the recycling processes for MDF and HDF board material and other board material from the prior art.

The invention, according to a first aspect, relates to a process for the production of a wood fiberboard, preferably for the production of an MDF or HDF board. The process comprises the step in which refined material from recycled wood fiberboards - preferably from recycled MDF or HDF boards - is wetted, heated and pressurized using steam. The process comprises the step in which this material is kept under pressure and temperature for a certain amount of time, followed by the step of reducing the pressure of this material by at least 3 bar, preferably by at least 5 bar, more preferably by at least 7 bar; more preferably by at least 10 bar, more preferably by at least 11 bar. After this pressure reduction, the material is transformed into recycled wood fibers, possibly with a fraction of wood fiber clumps and any other impurities. The process comprises the step of supplying the recycled wood fibers as feedstock in a production line - preferably in a dry production process - for producing wood fiberboard, preferably for the production of MDF or HDF boards.

This process makes it possible to recycle wood fiberboards in an efficient manner and to use them to produce new wood fiberboards (for example MDF or HDF boards or softboard or hardboard). The combination of keeping the material to be recycled under temperature, moisture and pressure for a certain amount of time, on the one hand; and the pressure-reduction step, that is to say the step of reducing the pressure, on the other hand, appears to ensure that the wood fibers are released from the introduced material again.

Preferably, the quantity of wood fiber clumps in the material immediately after the pressure reduction is less than 5 percent by weight, preferably less than 3 percent by weight, more preferably less than 2 percent by weight, even more preferably less than 1 percent by weight. Such embodiments afford even greater efficiency to the process. These embodiments may be carried out by a suitable choice of the process parameters, preferably due to the fact that in the step in which refined material from recycled wood fiberboards is wetted, heated and pressurized using steam, the material is brought to above 12 bar. If this is optionally effected using saturated steam, even greater energy efficiency of the process is obtained. The energy efficiency is expressed as the quantity of energy required per mass quantity of produced recycled wood fibers.

Other impurities may for example be or may for example comprise paper. This is for example the case when the wood fiberboards to be recycled comprise laminates, having for example an MDF/HDF core and one or more impregnated paper layers.

The refined material from recycled wood fiberboards preferably has a moisture content of at most 15 percent by weight, even more preferably a moisture content of at most 10 percent by weight.

Dust may be present during this process. This process therefore preferably takes place in a more or less enclosed device. By way of example, a device comprising closed conveying systems, such as closed/enclosed conveyor belts and/or a closed pneumatic conveying system and/or closed/enclosed screws. Preferably, in order to obtain the refined material from recycled wood fiberboards, a portion of the dust was already removed so that the dust content in the refined material which is wetted, heated and pressurized is sufficiently low. In this way, the risk of blockages during the process is reduced.

A preferred embodiment of the invention is characterized in that in the step in which refined material from recycled wood fiberboards is wetted, heated and pressurized using steam; this material is brought to a pressure of at least 4 bar, preferably of at least 6 bar, more preferably of at least 7 bar. The material may thus be brought to a pressure of between 7 and 9 bar, for example 8 bar. The material is preferably brought to a pressure of at least 10 bar or preferably at least 11 bar, or preferably at least 12 bar. It has been shown that both a high temperature and a high pressure are favorable for efficiently producing the recycled wood fibers. If the material is brought to a higher pressure, it is possible to implement a greater pressure drop during the step of reducing the pressure of the material. A large pressure drop in this step has proven to have a positive effect on the efficiency of the process. In the case of a larger pressure drop, the material can be introduced more rapidly and/or the material does not have to be kept at pressure for as long and/or the used refined material from recycled wood fiberboards can have a lower homogeneity/a lower quality. A lower homogeneity may for example indicate that there are a lot of large chunks present in the refined material from recycled wood fiberboards. A lower quality may indicate that there are a lot of impurities present such as paper, metal, glass, plastic, etc. The material may be brought, for example, to a pressure of 12 bar, 13 bar or 14 bar. Preferably, the refined material from recycled wood fiberboards is brought at most to a pressure of 20 bar, preferably at most to a pressure of 18 bar, such that the recycled wood fibers do not exhibit any thermal damage.

A specific embodiment of the invention is characterized in that in the step in which refined material from recycled wood fiberboards is wetted, heated and pressurized using steam; this material is brought to a pressure of at least 12 bar. It has been shown that a higher pressure is favorable for efficiently producing the recycled wood fibers, inter alia due to the fact that fewer fiber clumps are produced. If the material is brought to a higher pressure, it is possible to implement a greater pressure drop during the step of reducing the pressure of the material. A larger pressure drop in this step has proven to have a positive effect on the efficiency of the process.

A preferred embodiment of the invention is characterized in that liquid water is continuously or periodically discharged during or after the step of reducing the pressure; and/or during the step in which refined material from recycled wood fiberboards is wetted, heated and pressurized using steam; and/or during the step in which this material is kept under pressure and temperature for a certain amount of time. This embodiment has the additional advantage that the recycled wood fibers have a relatively low moisture content, for example a moisture content of at most 20 percent by weight, that is to say for example a moisture content of between 10 and 15 percent by weight. These recycled wood fibers can then be used directly in the production of wood fiberboards, without requiring an additional drying process. A drying process denotes a process whose main goal is drying. Other processes, which do not have the main goal of drying, may of course also provide a limited degree of drying, however such other processes are not regarded as a drying process here. Such another process which is not regarded as a drying process, but in which drying may indeed occur, is the process in which wood fiber clumps and any other impurities are separated off from the transformed material (see below), use being made, for example, of a wind sifter and/or a sieve. Of course, an additional drying process can still be used. This embodiment additionally has the advantage that the discharging of the liquid water, mainly formed by condensation, during this step or these steps, increases the efficiency of the process. This is due to the fact that the liquid water no longer has to be discharged subsequently, as a result of which a new quantity of material can be introduced into the process more rapidly. Heating can also be performed more rapidly, since this water does not also have to be heated. Preferably, liquid water is continuously or periodically discharged during or after the step of reducing the pressure.

Preferably, after the step of reducing the pressure, the recycled wood fibers have a moisture content of between 3 and 20 percent by weight, preferably of between 5 and 15 percent by weight, preferably of between 10 and 15 percent by weight. The moisture content may thus be between 10 and 13 percent by weight, for example 11 or 12 percent by weight. In this case, the moisture content corresponds to the moisture content of new, that is to say non-recycled, wood fibers derived from new wood which have not been subjected to a drying process, as a result of which the recycled wood fibers can be applied in a simple manner in a process for the production of wood fiberboards which uses a certain quantity of new wood fibers and/or existing production processes for wood fiberboards can be implemented in a simple manner. An additional drying step is redundant here.

Furthermore, in a specific embodiment, it is additionally possible for the moisture content of the recycled wood fibers to be measured continuously or periodically using a measuring device, in which case on the basis of the obtained results measured by the measuring device, water may or may not be added to the process to change the moisture content. It may for instance be desirable for the recycled wood fibers to have a moisture content within a determined range, for example a range of between 10 and 13 percent by weight, preferably between 11 and 12 percent by weight. If the measurement results show that the moisture content is lower than a desired range and/or a determined minimum, one can opt to add additional water. It is thus for example possible to add water to the refined material from recycled wood fiberboards, for example prior to or during the heating and pressurizing using steam. Water may also be added to, for example sprayed onto, the recycled wood fibers. This is preferably performed by means of a closed-loop control circuit.

A preferred embodiment of the invention is characterized in that, after the pressure reduction step and prior to the step of supplying the recycled wood fibers in the production line for producing wood fiberboard, the process comprises the step of separating off wood fiber clumps and any other impurities from the transformed material. This separating preferably makes use of the difference in mass between, on the one hand, the wood fibers and, on the other hand, wood fiber clumps and any other impurities. This separating has various advantages. On the one hand, wood fiber clumps and any other impurities are prevented from forming defects in the wood fiberboard produced. On the other hand, pressing equipment is prevented from becoming damaged during the pressing of the wood fiberboard. Furthermore, the separating off of the wood fiber clumps also allows the latter to be recycled toward the infeed, such that they can still be recycled to form wood fibers.

A preferred embodiment of the invention is characterized in that in the step of separating off wood fiber clumps and any other impurities from the transformed material, use is made of one or more of a sieving operation, a wind sifter, a zigzag sifter, a cyclone or a 3D sieve. The use of a 3D sieve may also be regarded as a sieving operation or may form part of a sieving operation. These methods allow fiber clumps and any other impurities to be separated off in an efficient manner. Use may be made of one method or of a combination of 2, 3 or more methods. It is thus possible to make use of a cyclone and a wind sifter, it is possible to make use of a wind sifter and a 3D sieve, or of a cyclone, a wind sifter and a 3D sieve. Use may also be made of two or more wind sifters, possibly in combination with one, two or more (3D) sieves. Which one or more methods are used will also depend on the expected impurities, thus on the material used. It is thus possible to select an appropriate method for each type of impurities, for example wood fiber clumps, paper, glass, metal, plastic, etc.

A preferred embodiment of the invention is characterized in that at least a portion - and preferably the entire quantity - of the separated wood fiber clumps are reintroduced into the process so that these separated wood fiber clumps are wetted, heated and pressurized using steam together with newly introduced refined material from recycled wood fiberboards. According to this embodiment, at least a portion of, and preferably all of, the separated wood fiber clumps are reintroduced into the process. These fiber clumps are then treated in the process again together with newly introduced refined material. This means that the fiber clumps are further refined to form fibers via this internal recycling process. It is possible for fiber clumps to pass through this internal recycling process several times before they are refined to form wood fibers. This embodiment makes it possible to obtain a high degree of efficiency of the transformation of the introduced refined material from recycled wood fiberboards. It is thus possible to opt to carry out the process more rapidly, and, for example, to keep the refined material at temperature and pressure for a shorter period of time, given that the potential wood fiber clumps will be reintroduced in any case. The process parameters may also be adjusted such that the process is favorable in terms of energy.

In a specific embodiment of the invention, at least a portion - and preferably the entire quantity - of the separated wood fiber clumps are not reintroduced into the process so that these separated wood fiber clumps do not have a negative influence on the process.

Preferably between 0.1 kg of steam and 1 kg of steam is consumed per kg of recycled wood fibers produced, even more preferably between 0.2 kg of steam and 0.7 kg of steam. For example 0.4 kg, 0.5 kg or 0.6 kg of steam is consumed for the production of 1 kg of recycled wood fibers.

A preferred embodiment of the invention is characterized in that the period of time from starting the step in which refined material from recycled wood fiberboards is wetted, heated and pressurized using steam; to the beginning of the step of reducing the pressure of this material by at least 3 bar, and preferably by at least 5 bar, more preferably by at least 7 bar; by a pressure difference for example of between 6 and 9 bar, for example of between 7 and 9 bar, of for example 8 bar; preferably higher than at least 10 bar, preferably higher than at least 11 bar; is less than 5 minutes, is preferably less than 3 minutes, is more preferably less than 2 minutes, is more preferably less than 90 seconds, and is more preferably more than 60 seconds. These embodiments have the advantage that a high degree of efficiency of the process is obtained.

A preferred embodiment of the invention is characterized in that the duration of the step in which refined material from recycled wood fiberboards is wetted, heated and pressurized using steam is at most 20 seconds. This rapid heating step ensures that the formation of condensate is limited, and that optimal efficiency of the process is obtained, also and especially in terms of the energy required.

A preferred embodiment of the invention is characterized in that the step of reducing the pressure of the material is carried out in a time span of less than 1 minute, preferably of less than 45 seconds, even more preferably of less than 30 seconds. This step can be carried out in a time span of at least 15 seconds, for example of at least 20 seconds. This step can also take place in a time span of at most 20 seconds, preferably of at most 15 seconds or even more preferably of at most 10 seconds. A more rapid pressure reduction appears to ensure improved release of the fibers from the material introduced. However, an excessively rapid pressure drop due to excessively rapid release of the steam can be unfavorable because a not inconsiderable quantity of fibers may be blown off together with the released steam and may thus be lost. In order to prevent the loss of a certain quantity of fibers during the pressure drop, it is possible to operate with a filter, in which case the surface of this filter is preferably cleaned regularly or continuously in order to avoid clogging of the filter. If operation is performed with such a filter, the pressure can be reduced in a time span of less than 15 seconds. Even if the pressure is reduced in a time span of at least 15 seconds, operation can be performed with such a filter.

A preferred embodiment of the invention is characterized in that, in the recycled wood fiberboards introduced, the wood fibers are glued using urea-formaldehyde adhesive or using melamine-urea-formaldehyde adhesive, preferably a melamine-urea-formaldehyde adhesive having a melamine mass percentage in the adhesive of less than 15%, or using a bioadhesive, or using MDI (methylene diphenyl diisocyanate)-based or pMDI (polymeric methylene diphenyl diisocyanate)-based adhesives. The bioadhesive is for example based on sugars and/or amines, or is for example based on lignin or is for example based on highly branched amides or is for example based on starch. Bioadhesives can be used to form very ecological wood fiberboards. If the recycled wood fiberboards introduced do not comprise, or do not only comprise, a bioadhesive, it is possible to opt to add only bioadhesive for producing the new wood fiberboards. Preferably, the adhesive used to form the new wood fiberboards is of the same type as the adhesive of the recycled wood fiberboards.

A preferred embodiment of the invention is characterized in that the process comprises the step of mechanically breaking down recycled wood fiberboards to obtain the refined material from recycled wood fiberboards, preferably to form refined material having an average size according to numbers of less than 10 cubic centimeters, more preferably less than 5 cubic centimeters, more preferably less than 3 cubic centimeters. This step can thus be carried out in the process itself, after which this refined material is wetted, heated and pressurized using steam. However, this step may also be carried out in advance or in a separate manner, separately from the process according to the invention itself. Refined material may then, for example, be purchased and introduced into the process according to the invention.

In order for the average size according to number to be sufficiently low, it is optionally possible to operate with a sieve which is used prior to the wetting, heating and pressurizing using steam. It is thus for example possible to use one or more sieves in order to divide the refined material from recycled wood fiberboards at least into two fractions, wherein these sieves have, for example, square and/or circular openings of 100 cm², 50 cm², 25 cm², etc. The refined material is preferably material which is able to pass through a sieve having square and/or circular openings of 100 cm², even more preferably 50 cm², most preferably 25 cm². Preferably at least 80%, even more preferably at least 90%, of all the particles of the refined material have a weight of between 5 grams and 20 grams.

During the step of mechanically breaking down recycled wood fiberboards, the recycled wood fiberboards are preferably introduced into a breaking installation which breaks the recycled wood fiberboards so as to form broken recycled wood fiberboards. These broken recycled wood fiberboards can already be said refined material. However, this step of mechanically breaking down recycled wood fiberboards may optionally additionally comprise introducing the broken recycled wood fiberboards into a separating installation, for example a sieving installation comprising one or more sieves and/or 3D sieves and/or for example one or more wind sifters, for formation of the refined material. Large pieces of broken recycled wood fiberboards, which may, for example, hinder the further process, can thus be separated off. Dust can also be removed by means of this sieving installation. It is for example possible to operate with a minimum of two sieves, the one sieve being used to separate off dust and the other sieve being used to separate off large pieces. Large pieces refer, for example, to pieces which are retained by a sieve having square/circular openings of 200 cm², 100 cm² or 50 cm² or 25 cm². In this way, large pieces are prevented from hindering the process. Large pieces are thus prevented from causing blockages. These separated large pieces can be reintroduced into the breaking installation in order to be made smaller and/or these separated large pieces can be burned to generate energy. This separating installation can also be used to separate non-fibrous material from the broken recycled wood fiberboards, such as for example stones, plastic, glass, metal, paper - if the recycled wood fiberboards comprise, for example, laminate - or pieces of wood - if the recycled wood fiberboards comprise, for example, (veneer) parquet. It is possible that, prior to introduction into the breaking installation, the recycled wood fiberboards have already been subjected to a cleaning step in order to separate off, for example, stones, plastic, metal, glass, etc.

It is also possible that the refined material from recycled wood fiberboards is separated into fractions on the basis of, for example, size and/or weight, for example by means of one or more (3D) sieves. Here, it is then possible to adapt the process parameters to the fraction of refined material introduced.

During the step of mechanically breaking down recycled wood fiberboards, if the recycled wood fiberboards comprise, for example, laminate consisting of an MDF/HDF core which is coated on both sides with one or more layers of impregnated paper, this laminate is preferably broken in such a way that the broken recycled wood fiberboards formed comprise paper only on one side. During the step of mechanically breaking down recycled wood fiberboards, if the recycled wood fiberboards for example consist of an MDF/HDF core which is coated on both sides with a lacquer, a varnish, a veneer, etc., the recycled wood fiberboards are preferably broken in such a way that the broken recycled wood fiberboards formed comprise lacquer, varnish, veneer, etc., only on one side.

Preferably, dust is separated off after the mechanical breaking down, for example by means of sieving, by means of rinsing with water or by means of wind sifting. This step prevents the dust from also being further processed, which could cause problems in the further process. The need to consume energy to heat the dust is also avoided. Dust is, for example, the fraction of the broken recycled wood fiberboards which is able to fall through a sieve having circular and/or square openings with a size of, for example, 1000 mm², 500 mm², 100 mm², 50 mm² or 25 mm². This dust may possibly be partially usable as filler. It is therefore possible for this dust, or in any case a portion of this dust, to be used as feedstock in a production line - preferably in a dry production process - for producing wood fiberboard, preferably for producing MDF or HDF boards. It is thus for example possible to divide this dust further so that only the small fractions present in this dust are used as feedstock. For this purpose, use may for example be made of a sieve having smaller openings than described above in this paragraph, for example circular/square openings of at most 20 mm² or 10 mm². The remaining dust, or all of the dust if the latter is not being used as feedstock, can be used to generate energy, for example by burning this dust.

Preferably, the recycled wood fiberboards are mechanically broken down in a dry state, in a dry state meaning that this mechanical refining is not preceded by a wetting step. This increases the process efficiency, since in this way less energy is required to achieve the desired temperature and pressure in the step in which refined material from recycled wood fiberboards is wetted, heated and pressurized using steam; and since dust formed can be discharged more easily before further process steps are carried out.

A preferred embodiment of the invention is characterized in that in the step in which refined material from recycled wood fiberboards is wetted, heated and pressurized using steam, the wetting is effected with addition of additives, for example of surfactants, of one or more acids, or of one or more bases. Such additives can ensure that the wood fibers are released from the refined material from recycled wood fiberboards more easily.

A preferred embodiment of the invention is characterized in that in the step in which refined material from recycled wood fiberboards is wetted, heated and pressurized using steam, the wetting is effected without addition of additives. This prevents adverse environmental impacts from occurring or prevents the additives from being incorporated in the wood fiberboard produced.

A preferred embodiment of the invention is characterized in that in the step in which refined material from recycled wood fiberboards is wetted, heated and pressurized using steam, preferably using saturated steam, the refined material is heated to a temperature lower than 240°C, preferably lower than 230°C; and preferably higher than 130°C, and more preferably higher than 150°C, preferably higher than 170°C. Such temperatures are very suitable because they allow the wood fibers to be released efficiently without the wood fibers themselves being degraded, which would be the case at higher temperatures, since cellulose has a degradation temperature of 260°C.

A preferred embodiment of the invention is characterized in that in the step in which this material is kept under pressure and temperature for a certain amount of time, the refined material is kept at an absolute pressure of at least 12 bar for a period of at least 15 seconds, preferably of at least 30 seconds, preferably of at least one minute, preferably less than 5 minutes, more preferably less than 3 minutes and more preferably less than 2 minutes. The use of a pressure of at least 12 bar has proven to be particularly advantageous. Such a pressure value makes it possible to operate with a large pressure drop in the step of reducing the pressure, which is advantageous for releasing wood fibers from the material introduced.

More preferably, in the step in which this material is kept under pressure and temperature for a certain amount of time, the refined material is kept at a temperature lower than 240°C, more preferably lower than 230°C; and preferably higher than 150°C, and preferably higher than 180°C. Such temperatures are very suitable because they allow the wood fibers to be released efficiently without the wood fibers themselves being degraded, which would be the case at higher temperatures, since cellulose has a degradation temperature of 260°C.

A preferred embodiment of the invention is characterized in that in the step in which refined material from recycled wood fiberboards is wetted, heated and pressurized using steam, the heating is achieved using steam by means of steam injection - preferably by means of saturated steam or by means of wet steam - in the process equipment which comprises or conveys the refined material from recycled wood fiberboards. The use of saturated steam appears advantageous for achieving the objective of performing wetting, but doing so with minimal formation of condensate.

Optionally, additives - for example surfactants, one or more acids or one or more bases - can be added.

Optionally, it is possible to proceed without addition of additives.

It is optionally possible for the refined material from recycled wood fiberboards to be subjected to a pretreatment, for example a pretreatment in which the refined material from recycled wood fiberboards is exposed to steam, for example steam at ambient pressure. A pretreatment may reduce the time period in which this material is held under pressure and temperature for a certain amount of time.

More preferably, the heating using steam is achieved by introducing the refined material from recycled wood fiberboards into a pressure vessel - preferably a pressure vessel with continuous flow or a discontinuous pressure vessel -; and injecting steam - preferably saturated steam or wet steam - into this pressure vessel; optionally wherein additives - for example surfactants, one or more acids or one or more bases - are added; or optionally wherein no additives are added.

More preferably, the recycled wood fibers, possibly with a fraction of wood fiber clumps and any other impurities, are removed from the pressure vessel by means of a screw. This is a very efficient way of proceeding, which also makes it possible to operate in a continuous process. The pressure reduction step can also be carried out at the outlet of the screw, such that no special provisions are required for carrying out this step. The outlet may additionally be provided with a flap or a linearly movable closure element, such as a stop, a cap, a plug, and this is done so as to form/maintain a clump at the end of the screw. The stop, the cap or the plug is, for example, conical. Said clump is formed here by the refined material itself. **In** addition, or instead of operating with a flap or a linearly movable closure element, the dimensions of the screw may decrease, or the dimensions at the level of the screw may decrease, in such a way that the fibrous material is compressed while being brought to the outlet, and a said clump is formed.

A preferred embodiment of the invention is characterized in that, after the step of reducing the pressure of the material, this material is no longer conducted through a mechanically operating apparatus which would mechanically refine this material and/or no further mechanical refining of this material takes place. This makes it possible to minimize the process equipment and to prevent the recycled wood fibers obtained from being damaged, as this could lead, inter alia, to undesired shortening of the fibers and to the formation of dust.

A preferred embodiment of the invention is characterized in that, after the step of reducing the pressure of the material, this material is subjected to another step in which the material is mechanically refined, preferably due to the fact that the material is treated by means of one or more rolls provided with pins or teeth. This step allows the process to be carried out as energetically as possible, by adjusting the steps of wetting, heating and pressurizing; of keeping the material under pressure and temperature for a certain amount of time and of reducing the pressure such that not all wood fibers are released. This is possible with less drastic process conditions, which therefore require less energy. The step in which the material is mechanically refined then makes it possible to increase the wood fiber yield.

A preferred embodiment of the invention is characterized in that the steps in which refined material from recycled wood fiberboards is wetted, heated and pressurized using steam; and/or in which this material is kept under pressure and temperature for a certain amount of time, and/or in which the pressure of the material is reduced, are carried out in batch.

More preferably, this batch process is carried out in a receptacle (for example in a pressure vessel), wherein this receptacle comprises a stirring mechanism, wherein this stirring mechanism mixes the refined material in the receptacle at least for a portion of the time period - and preferably for the entire time period - in which refined material from recycled wood fiberboards is being wetted, heated and pressurized using steam and is being kept under pressure. This embodiment has the advantage that the refined material is treated homogeneously in the receptacle, as a result of which the process runs more rapidly and more efficiently, wherein the transformation into recycled wood fibers is effected more rapidly and more completely. Instead of operating with a stirring mechanism to obtain good mixing, it is also possible to opt to operate with a receptacle which is able to spin around, for example to rotate about an axis of rotation. Of course, it is possible to opt to operate with a receptacle which can spin around and which comprises a stirring mechanism.

For this batch process, it is possible to operate with 1 receptacle, for example 1 pressure vessel, but it is also possible to operate with two or more receptacles which are preferably arranged parallel to one another. If there are two or more receptacles, the latter may for example be operated alternately, in order to achieve continuity in the formation of recycled wood fibers.

Also more preferably, this batch process is carried out in a receptacle, wherein liquid water is continuously or periodically discharged from this receptacle. This has the additional advantage that the recycled wood fibers have a relatively low moisture content, for example a moisture content of at most 20 percent by weight, that is to say for example a moisture content of between 10 and 15 percent by weight. These recycled wood fibers can then be used directly in the production of wood fiberboards, without requiring an additional drying process. This embodiment additionally has the advantage that the discharging operation increases the efficiency of the process. A drying process here denotes a process whose main goal is drying.

A preferred embodiment of the invention is characterized in that the steps in which refined material from recycled wood fiberboards is wetted, heated and pressurized using steam; and/or in which this material is kept under pressure and temperature for a certain amount of time, and/or in which the pressure of the material is reduced, are carried out in a continuous process. This allows the process to take place in a rapid and efficient manner. In addition, wood fiberboards are often also manufactured in a continuous process, as a result of which it is then possible to smoothly integrate the production of recycled wood fibers into the production of wood fiberboards.

Further preferably, the heating using steam is achieved by introducing the refined material from recycled wood fiberboards into a pressure vessel, the pressure vessel having a continuous flow and wherein the pressure during the process in this pressure vessel is kept more or less constant, that is to say that the pressure difference in this pressure vessel between the highest pressure and the lowest pressure during the process is preferably less than 2 bar, is preferably less than 1 bar, even more preferably less than 0.5 bar, most preferably less than 0.3 bar. By keeping the pressure constant, the quality of the recycled wood fibers obtained can be kept constant in an improved manner. The pressure in this pressure vessel is preferably at least 3 bar, preferably at least 5 bar, more preferably at least 7 bar. The pressure in this pressure vessel is, for example, between 7 and 10 bar, and is, for example, kept constant at around 8 bar or around 9 bar. Even more preferably, the pressure in the pressure vessel is at least 10 bar or at least 11 bar or at least 12 bar. The pressure in the pressure vessel is thus between 10 and 13 bar, for example, preferably between 11 and 13 bar. The pressure vessel comprises, for example, an inlet and an outlet, and, for example, a screw for advancing the material through the pressure vessel from the inlet to the outlet. In order to keep the pressure difference during the process as small as possible, the inlet and the outlet of the pressure vessel are preferably provided with means which make it possible, respectively, for material to be able to be introduced into the pressure vessel and for material to be able to be removed from the pressure vessel, without an excessive pressure loss occurring at the inlet and the outlet. It is thus for example possible for the inlet to comprise a pressure seal having, for example, a screw, such as a plug screw, for introducing material, and a sealing element, such as a cap, a plug, a stop, for example a conical sealing element which is arranged so as to be movable from and to the screw, and the outlet may also comprise a pressure seal as for example described above. This makes it possible for the outlet to be able to have a sufficient area and for blockages to be able to be avoided. These blockages are for example caused by impurities. It is possible to operate with a stop screw at the inlet and/or the outlet. The inlet and the outlet comprise openings which each have a determined area, wherein the size of the area of the opening of the outlet is preferably between 50% and 150% of the size of the area of the opening of the inlet, for example between 80% and 120%, for example between 90% and 110%. Thus, the size of the area of the outlet is at least 50%, preferably at least 75%, of the size of the area of the inlet. Thus, the size of the area of the opening of the inlet is, for example, equal to the size of the area of the opening of the outlet. The size of the area of the opening of the outlet is in this case then in the order of magnitude of the size of the area of the opening of the inlet, in such a way that the risk of blockages at the outlet is low. Pressure seals which are usable for the inlet and/or the outlet comprise, for example, one or more from the list of: one or more valves, one or more lock chambers, one or more rotors, such as a rotor of approximately triangular shape which sits in a drum, one or more pumps, one or more displacers, one or more screws, etc.

The pressure vessel may also be arranged so as to be able to rotate about, for example, a central axis of rotation and may optionally be constructed, for example comprise internal paddles, and/or be arranged, for example with a downward inclination between the inlet and the outlet, in such a way that a rotation of the pressure vessel results in the advance of the material through the pressure vessel. **In** this case, the introduction of the steam takes place preferably along the axis of rotation of the pressure vessel. It is thus possible to provide a central pipe having openings through which the steam is introduced, wherein the central pipe is, for example, arranged along the entire dimension of the pressure vessel along the axis of rotation, such that the steam is supplied along this entire dimension of the pressure vessel.

Also further preferably, the step in which the pressure of the material is reduced takes place in a receiving unit comprising, for example, a vessel, wherein liquid water is continuously or periodically discharged from this receiving unit and wherein preferably the receiving unit has a continuous flow. This has the additional advantage that the recycled wood fibers have a relatively low moisture content, for example a moisture content of at most 20 percent by weight, that is to say for example a moisture content of between 5 and 15 percent by weight, for example of between 10 and 15 percent by weight. These recycled wood fibers can then be used directly in the production of wood fiberboards, without requiring an additional drying process. This receiving unit comprises, for example, a vessel. A drying process here denotes a process whose main goal is drying. This receiving unit comprises, for example, a cyclone and/or a separating device such as a wind sifter and/or a separating device such as a 3D sieve.

Even more preferably, the receiving unit comprises a vessel and the pressure in the pressure vessel is higher than the pressure in said vessel of the receiving unit, wherein preferably the pressure in this vessel is more or less constant, that is to say that the pressure difference in this vessel between the highest pressure and the lowest pressure during the process is preferably less than 0.5 bar, even more preferably less than 0.2 bar, most preferably less than 0.1 bar. The pressure of the vessel is, for example, more or less atmospheric pressure, that is to say more or less 1 bar. The pressure of this vessel may also be higher, for example 4 bar or 5 bar, such that the recycled wood fibers can be treated with adhesive under pressure. The pressure drop, that is to say the pressure difference between the pressure vessel and the vessel, is in this case then, for example, greater than 3 bar, greater than 5 bar, greater than 7 bar, between 6 and 9 bar, preferably greater than 10 bar or greater than 11 bar. It is for example possible for this vessel to form part of a separating device (see below).

Also further preferably, the receiving unit comprises a separating device for separating recycled wood fibers, possibly with a fraction of wood fiber clumps and any other impurities, from the water. This separating device may comprise, for example, a grid or another object with openings through which water can enter. The separating device may comprise, for example, a wind sifter and/or a cyclone and/or a 3D sieve. It is thus possible for the receiving unit to successively comprise a cyclone and a wind sifter. The cyclone can then be used, for example, to separate the recycled wood fibers from the wood fiber clumps, and the wind sifter can then be used, for example, to separate the recycled wood fibers from any paper. It is for example also possible to operate with two wind sifters and to adjust them both differently such that the one is more suitable for separating off wood fiber clumps and the other is more suitable for separating off paper. It is also possible to operate with a wind sifter and a 3D sieve or with a cyclone, a wind sifter and a 3D sieve. The separating device may also assist in the separation of steam and the recycled wood fibers, a cyclone can, for example, provide separation between the recycled wood fibers and steam.

A preferred embodiment of the invention is characterized in that the recycled wood fibers, without them having been treated with adhesive in advance, are mixed with adhesive-treated wood fibers - preferably with newly produced adhesive-treated wood fibers -; and are introduced as feedstock in the production line for producing wood fiberboard. Preferably, in this case, the mass percentage of recycled wood fibers in the combination of the recycled wood fibers and the adhesive-treated wood fibers is less than 20, more preferably less than 10 and even more preferably less than 5.

The use of non-adhesive-treated recycled wood fibers in combination with adhesive-treated newly produced wood fibers makes it possible to keep the installation limited, since it is not necessary to provide an installation for coating the recycled wood fibers with adhesive. If the mixing of the non-adhesive-treated recycled wood fibers with the adhesive-treated newly produced wood fibers is effected in a turbulent air flow, or these wood fibers are conveyed in a turbulent air flow after mixing, it has been shown that a certain degree of adhesive transfer occurs between the non-adhesive-treated recycled wood fibers and the adhesive-treated newly produced wood fibers. Although such transfer is not required to produce wood fiberboards of sufficient quality, such transfer can still be favorable.

A preferred embodiment of the invention is characterized in that the recycled wood fibers are treated with adhesive, preferably using urea-formaldehyde adhesive, using melamine-urea-formaldehyde adhesive, using phenol adhesive, or using MDI or pMDI adhesive, or using bioadhesive, or using adhesive compositions which comprise one or more of the adhesives mentioned.

More preferably, the recycled wood fibers are treated with adhesive together with new wood fibers.

However, it is also possible to coat the new wood fibers with adhesive in a step which is separate from the step of treating the recycled wood fibers with adhesive. Such an embodiment allows the treating of the two groups of wood fibers with adhesive to be optimized for each of these groups.

If the recycled wood fibers are treated with adhesive, they are preferably treated with adhesive by introducing the recycled wood fibers into a pneumatic flow and injecting adhesive into this flow, more preferably together with hardeners and/or more preferably with additives such as, for example, paraffin or wax.

A preferred embodiment of the invention is characterized in that the recycled wood fibers - which may or may not be treated with adhesive - are conveyed in a - preferably hot - turbulent air flow. The conveying of the recycled wood fibers in a turbulent air flow has the advantage that wood fibers which are still connected to one another to some extent are detached from one another by the turbulence. This is advantageous for the quality of the wood fiberboard to be produced.

More preferably, new, adhesive-treated wood fibers are introduced into this - preferably hot - turbulent air flow, such that the recycled wood fibers are conveyed together with new, adhesive-treated wood fibers in this turbulent air flow.

More preferably, the conveyance in the turbulent air flow is followed by one or more separation units, for example for separating off water vapor and hot gases - for example by means of a cyclone - and/or for separating off heavy constituents - preferably by means of gravity.

A preferred embodiment of the invention is characterized in that, in the step of supplying the recycled wood fibers in the production line for producing wood fiberboard, in addition to the recycled wood fibers, new, adhesive-treated wood fibers (meaning wood fibers which have been newly produced from wood and not from recycling wood fiberboards - recycled wood fiberboards) are also used as feedstock. The mixing of the recycled wood fibers with new, adhesive-treated wood fibers has the advantage that a possibly lower quality of recycled wood fibers can still be used efficiently in the production of new wood fiberboards.

More preferably, for this production step, step of supplying the recycled wood fibers in the production line, the recycled wood fibers are mixed with the new, adhesive-treated wood fibers. More preferably, this mixing is effected before, in or after the blowline which pneumatically conveys the new, adhesive-treated wood fibers to the step of production of the wood fiberboard. These embodiments make it possible to optimize the process in terms of process equipment. The investment costs for a new process line, or the conversion of an existing process line for producing wood fiberboards through addition of equipment for carrying out the steps according to the invention for producing the recycled wood fibers, can be limited in this case.

The mixing before, in or in the blowline also makes it possible to obtain very intimate mixing of the recycled wood fibers with the new, adhesive-treated wood fibers.

Preferably, the - either adhesive-treated or non-adhesive-treated - recycled wood fibers are mixed with the new, adhesive-treated wood fibers. A drying operation is carried out on the mixture of the recycled wood fibers and the new, adhesive-treated wood fibers. More preferably, the drying operation is carried out while the mixture of the recycled wood fibers and the new, adhesive-treated wood fibers are being conveyed in a turbulent air flow. The turbulent air flow has the advantage that good mixing of the recycled wood fibers and the new, adhesive-treated wood fibers is obtained. If the recycled wood fibers are not treated with adhesive, the mixing in the turbulent air flow also results in a certain exchange of adhesive between the new, adhesive-treated wood fibers and the non-adhesive-treated recycled wood fibers. This increases the quality of the wood fiberboard produced.

Preferably, the proportion of recycled wood fibers in the sum of the recycled wood fibers and the new, adhesive-treated wood fibers is less than 50 percent by weight; and preferably less than 20 percent by weight; and preferably less than 5 percent by weight, if use is made of non-adhesive-treated recycled wood fibers. Such embodiments ensure good quality of the wood fiberboard produced.

In one embodiment of the invention in which use is made of the recycled wood fibers and of new, adhesive-treated wood fibers, the weight percentage of recycled wood fibers with respect to the total of the recycled wood fibers and the new, adhesive-treated wood fibers is constant through the thickness of the wood fiberboard produced.

In one embodiment of the invention in which use is made of the recycled wood fibers and of new, adhesive-treated wood fibers, the wood fiberboard produced is built up in multiple layers. At least one of the surface layers - and preferably the surface layers on both sides of the wood fiberboard produced - comprises a lower mass percentage of recycled wood fibers than at least one other layer of the board. More preferably, the at least one surface layer - and more preferably the surface layers on both sides of the board produced - comprise no recycled wood fibers. These embodiments make it possible to produce wood fiberboards of higher quality.

A preferred embodiment of the invention is characterized in that in the step of the production process of the wood fiberboard, only the recycled wood fibers are used as wood-comprising feedstock. This allows maximum use to be made of recycled wood fiberboards in the production of new wood fiberboards.

A preferred embodiment of the invention is characterized in that the following steps are carried out in-line - and preferably continuously:
- optionally the step of mechanically breaking down recycled wood fiberboards to obtain refined material from recycled wood fiberboards, preferably to form refined material having an average size according to numbers of less than 10 cubic centimeters, more preferably less than 5 cubic centimeters, more preferably less than 3 cubic centimeters; and/or preferably to form refined material which is able to pass through a sieve having square and/or circular openings of 100 cm², even more preferably 50 cm², most preferably 25 cm²;
- the step in which refined material from recycled wood fiberboards is wetted, heated and pressurized using steam;
- the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
- the pressure reduction, after which the material is transformed into recycled wood fibers, possibly with a fraction of wood fiber clumps and impurities;
- optionally the step of separating off wood fiber clumps and any other impurities from the transformed material;
- the step of supplying the recycled wood fibers in a production line - preferably in a dry production process - for producing wood fiberboard, preferably for producing MDF or HDF boards.

This embodiment makes it possible to carry out all of the process steps in a highly efficient manner. This embodiment also allows existing production lines for producing wood fiberboards from newly produced wood fibers to be optimally modified to carry out the inventive process.

A preferred embodiment of the invention is characterized in that the recycled wood fiberboards entirely or partly concern production waste or production losses, optionally in that the recycled wood fiberboards come from a process for the production of wood fiberboard as described in any one of the preceding claims; and/or wherein the recycled wood fiberboards comprise or concern post-consumer wood fiberboards.

The embodiment in which the recycled wood fiberboards entirely or partly concern production waste or production losses has the advantage that recycling can be performed in a very short chain. It is possible for the waste and/or losses from the process according to the invention to be fed back into the inventive process as feedstock so as to be used to produce recycled wood fibers.

A preferred embodiment of the invention is characterized in that, in the step of supplying the recycled wood fibers for producing wood fiberboard, in addition to recycled wood fibers, new, adhesive-treated wood fibers are also used as feedstock; preferably wherein the recycled wood fibers are, on average, finer and/or shorter than the new wood fibers, preferably wherein, for this production step, the recycled fibers are mixed with the new, adhesive-treated wood fibers.

A preferred embodiment of the invention is characterized in that the parameters of the process - for example pressure, temperature, duration for which the material is kept at temperature and pressure and the speed with which the pressure is reduced - for producing recycled wood fibers are set in such a way, and/or the recycled wood fiberboards are selected in such a way, that the recycled wood fibers have an average length which deviates from the average length of the new, adhesive-treated wood fibers by at most 20% - and preferably by at most 10%. This makes it possible to manufacture wood fiberboards of very good quality.

A preferred embodiment of the invention is characterized in that, in an in-line process parallel with the process in which the recycled wood fibers are obtained, the new, adhesive-treated wood fibers are produced from new and/or from recycled wood.

Preferably, the process for producing new, adhesive-treated wood fibers comprises the step of mechanically refining the new and/or recycled wood, preferably by means of rotating disks between which the material is guided, more preferably by a "refiner", for example a "fluffer" machine.

A preferred embodiment of the invention is characterized in that the process for producing the new, adhesive-treated wood fibers comprises the step of mechanically refining the new and/or the recycled wood, in which case the new wood fibers are produced, preferably by means of rotating disks between which the material is guided, more preferably by a "refiner"; and in that the process of producing the recycled wood fibers comprises the step of mechanically refining the recycled wood fibers produced, preferably by means of rotating disks between which the material is guided, more preferably by a "refiner".

Preferably, the mechanical refining of the recycled wood fibers and the mechanical refining in which the new wood fibers are produced are separate processes, preferably carried out in parallel with one another. This allows the refining of these two groups of wood fibers to be set in an optimal manner for each of these groups of wood fibers.

Preferably, the consumed mechanical energy per ton of new wood fibers produced in the step of mechanical refining for the production of new wood fibers is greater - and preferably at least 20% greater, more preferably at least 50% greater - than the consumed mechanical energy per ton of recycled wood fibers produced in the step of mechanically refining the recycled wood fibers. This makes it possible to ensure that disintegration of the recycled wood fibers is limited. This is beneficial to the quality of the wood fiberboard to be produced.

A preferred embodiment of the invention is characterized in that, in the production line for producing the wood fiberboard, the wood fiberboard is produced via a dry production process, in which recycled wood fibers - and optionally new, adhesive-treated wood fibers - are deposited on a conveyor belt, wherein a wood fiber mat is formed, wherein this wood fiber mat is compressed - preferably at ambient temperature - in a first - preferably continuous - pressing operation, after which the wood fiberboard is obtained in a second - preferably continuous - pressing operation under elevated temperature and pressure.

Preferably, the depositing of the wood fibers, the first pressing operation and the second pressing operation are carried out in-line and continuously.

A preferred embodiment of the invention is characterized in that the wood fiberboard produced has an average density of more than 500 kg/m³, preferably of more than 750 kg/m³.

More preferably, the wood fiberboard produced has, on both sides of the board, close to the surface of the board, a zone of higher density than the average density of the board. Even more preferably, this zone of higher density comprises at least one sub-zone which has an average density of more than 900 kg/m³, even more preferably of more than 1000 kg/m³.

A preferred embodiment of the invention is characterized in that, during the step of reducing the pressure of the refined material from recycled wood fiberboards, steam explosion occurs in this material. During the pressure reduction step, the lowering of the pressure also results in an increase in the volume of gases, this causing steam explosion. This means that, during the pressure reduction, the steam and moisture adsorbed on the introduced material expand; in this way, forces can occur, which ensures a separation of the wood fiber material and/or improves this separation.

In a preferred embodiment in which steam explosion is carried out, the steam explosion is carried out by pressing the material through an opening, the material ending up in an environment of lower pressure, as a result of which a rapid pressure drop in the material occurs, thus causing the steam explosion. Such a manner of steam explosion is readily integratable into a continuous process as described above. The pressure vessel then comprises, for example, an inlet and an outlet, and an internal screw which brings the material from the inlet to the outlet, and possibly additionally an extra screw for the pressing through the outlet. The material may or may not be mechanically compressed in this last-mentioned extra screw, prior to its introduction through the outlet. An extra screw may also be present for the pressing through the inlet. The internal screw which extends between the inlet and the outlet may also be the screw which is provided to bring the material through the outlet. In order to bring the material into the inlet, use may also be made of a screw, wherein the material may or may not be mechanically compressed in this screw, prior to its introduction through the inlet. In this case, the inlet and the outlet may each be provided with an opening which can be closed by means of a pressure seal, such that the pressure in the pressure vessel can be kept more or less constant during the process and a continuous process is possible. This pressure seal can be a pressure seal as described above.

In a preferred embodiment in which steam explosion is carried out, the steam explosion is carried out after the material has been conveyed in a screw, preferably the steam explosion takes place at the outlet of the screw. More preferably, the screw is configured in such a way that the material in the screw is mechanically compressed.

A preferred embodiment in which steam explosion is carried out is characterized in that steam - preferably saturated steam or wet steam - is injected into the screw; preferably wherein additives - for example surfactants, one or more acids or one or more bases - are added; or wherein no additives are added.

A preferred embodiment in which steam explosion is carried out is characterized in that the steam explosion takes place in a continuous process, or wherein the steam explosion takes place in a discontinuous process - for example by using a pressure vessel.

A preferred embodiment in which steam explosion is carried out is characterized in that the steam explosion step is carried out in a discontinuous process, wherein the wetted, heated and pressurized material is located in a receptacle, and wherein a flap or valve of the receptacle is opened, as a result of which the sudden pressure drop occurs which causes the steam explosion.

A preferred embodiment in which steam explosion is carried out is characterized in that the pressure drop during the steam explosion is at least 3 bar, and preferably at least 5 bar, more preferably at least 7 bar; more preferably at least 10 bar, more preferably at least 11 bar. Higher values for the pressure drop provide a better result of the separating of the wood fibers of the material introduced.

A preferred embodiment in which steam explosion is carried out is characterized in that, during the steam explosion, the pressure expands to below 3 bar absolute; more preferably wherein the pressure expands to below 2 bar absolute, more preferably wherein the pressure expands to below 1.5 bar absolute, preferably wherein the pressure expands to atmospheric pressure.

A preferred embodiment in which steam explosion is carried out is characterized in that, during the steam explosion, the pressure expands to above 5 bar absolute, and preferably to above 4 bar absolute. Such embodiments make it possible for the recycled fibers to be easily and efficiently introduced into a blowline used in installations for the production of wood fiberboards.

A preferred embodiment in which steam explosion is carried out is characterized in that, during the steam explosion, the pressure expands in less than 60 seconds, more preferably expands in less than 30 seconds, more preferably in less than 20 seconds, more preferably in less than 15 seconds, more preferably in less than 10 seconds, more preferably in less than 5 seconds, more preferably in less than 2 seconds, more preferably in less than 0.5 seconds. A more rapid reduction of the pressure causes higher forces which separate the wood fibers from the material introduced.

A preferred embodiment in which steam explosion is carried out is characterized in that, during the steam explosion, the pressure expands in at least 15 seconds, more preferably in at least 20 seconds, and more preferably in at least 30 seconds. Such embodiments have the advantage of preventing a significant quantity of recycled wood fibers from being discharged together with the steam, while the forces are high enough to separate the wood fibers from the material introduced.

A preferred embodiment of the invention is characterized in that, in the step of reducing the pressure, the ratio of the pressure drop to the duration of the reduction of the pressure is greater than 0.25 bar/second, and preferably greater than 0.3 bar/second, more preferably greater than 0.5 bar/second. This can ensure rapid and efficient steam explosion.

In a very preferred embodiment of the invention, one or more parameters are measured during the process, wherein the process can be adjusted as a function of these measured parameters. Examples of parameters which can be measured are: parameters of the recycled wood fiberboards, parameters of the refined material from recycled wood fiberboards, process parameters, parameters of the recycled wood fibers, parameters relating to the wood fiber clumps, environmental parameters. Parameters of the recycled wood fiberboards are, for example, the moisture content, the type of recycled wood fiberboard. The recycled wood fiberboards may, for example, comprise one or more recycled wood fiberboards from the list of: production waste inherent to the production of MDF/HDF boards -such as inferior produced MDF/HDF boards-, used MDF/HDF boards, laminate comprising MDF/HDF, veneer parquet comprising MDF/HDF, etc. Parameters of the refined material from recycled wood fiberboards are, for example, the moisture content, the maximum/minimum/average particle size, the maximum/minimum/average particle weight, the homogeneity, etc. Process parameters are, for example, the temperature in the pressure vessel, the pressure in the pressure vessel, the time that the refined material from recycled wood fiberboards spends in the pressure vessel, the quantity of condensate formed, the quantity of ammonia formed during the process, etc. Parameters of the recycled wood fibers are, for example, the moisture content, the average fiber length, etc. Parameters relating to the wood fiber clumps are, for example, the percentage of wood fiber clumps, the maximum/minimum/average size of the wood fiber clumps, the maximum/minimum/average weight of the wood fiber clumps, etc. The environmental parameters are, for example, the temperature, the air humidity, the air pressure, etc.

Further preferably, at least the process parameters are optionally adjusted as a function of these measured parameters. If, for example, the moisture level of the refined material from recycled wood fiberboards exceeds a determined minimum and/or maximum value and/or changes to an excessive extent, it is possible to opt to change, for example, pressure, temperature, duration for which the material is kept at temperature and pressure, and/or the rate of reduction of the pressure.

Also further preferably, it is possible for the recycled wood fiberboards to be subjected to a processing step in advance if the measured parameters are not desirable. For example, if the moisture level is too high, it is possible to opt to employ an additional drying step. Also further preferably, water can be added to the refined material from recycled wood fiberboards if the moisture level of the recycled wood fibers obtained is too low.

Also further preferably, attempts can be made to form as little condensate as possible and/or as little ammonia as possible, for example more or less no ammonia, and adjust the process parameters therefor.

In other words, by measuring one or more parameters at regular points in time and/or continuously during the process, the process can be optimized. It is thus possible to ensure that the quality of the recycled wood fibers obtained and/or the energy efficiency of the process is as optimal as possible.

In a specific embodiment, the wood fiberboard produced, preferably the MDF or HDF board produced, comprises at least three layers, namely two outer layers and at least one central layer, wherein the recycled wood fibers are at least added during the step of supplying the recycled wood fibers as feedstock for the purpose of forming said central layer. The quality of the recycled wood fibers produced, which have been subjected to the aforementioned treatment with steam, temperature and pressure, is very high, as a result of which they are definitely usable for the central layer. In fact, the quality may be high enough for forming a said outer layer. For example, the recycled wood fibers may also be used as feedstock for the purpose of forming one or both outer layers.

The present invention relates, according to a second aspect, to a process for the production of recycled wood fibers, wherein the process comprises the step in which refined material from recycled wood fiberboards - preferably from recycled MDF or HDF boards - is wetted, heated and pressurized using steam;
wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
wherein, after this pressure reduction, the material is transformed into recycled wood fibers, possibly with a fraction of wood fiber clumps and any other impurities. These recycled wood fibers can then be used as feedstock in a production line for the manufacture of, for example, insulation material, paper, cardboard, wood fiberboards, compost, etc. In other words, the invention is not limited to the forming of new wood fiberboards from recycled wood fiberboards. The recycled wood fibers obtained in the above-described process according to the first aspect of the invention can be used for all kinds of purposes. All the above-described embodiments for the process for the production of a wood fiberboard as described for the first aspect according to the invention, and this being without the steps that are specific to the production of new wood fiberboards, are therefore applicable to this process for the production of recycled wood fibers. The embodiments of the first aspect are therefore applicable, mutatis mutandis, to the second aspect.

These recycled wood fibers can be used as feedstock in a production line for the production of wood fiber-comprising elements. These wood fiber-comprising elements may be, for example: insulation material, paper, cardboard, wood fiberboards, a nonwoven comprising wood fibers, compost, etc.

The present invention relates, according to a third aspect, to a process for the production of a wood fiber-comprising element,
wherein the process comprises the step in which refined material from recycled wood fiber-comprising elements - preferably from recycled wood fiberboards - is wetted, heated and pressurized using steam;
wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
wherein, after this pressure reduction, the material is transformed into recycled wood fibers, possibly with a fraction of wood fiber clumps and any other impurities;
wherein this process comprises the step of supplying the recycled wood fibers as feedstock in a production line - for example in a dry production process - for producing wood fiber-comprising elements. All the above-described embodiments for the process for the production of a wood fiberboard as described for the first aspect according to the invention, and this being without the steps that are specific to the production of new wood fiberboards and without the need to specifically use recycled wood fiberboards, are therefore applicable to this process for the production of wood fiber-comprising elements. The embodiments of the first aspect are therefore applicable, mutatis mutandis, to the third aspect.

According to a divergent variant, the present invention relates to a process for the production of fiber-comprising elements, wherein the process comprises the step in which refined material from recycled fiber-comprising elements is wetted, heated and pressurized using steam;
wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar; wherein, after this pressure reduction, the material is transformed into recycled fibers, possibly with a fraction of fiber clumps and any other impurities;
wherein this process comprises the step of supplying the recycled fibers as feedstock in a production line - for example in a dry production process - for producing fiber-comprising elements.

These fiber-comprising elements may be, for example: insulation material, boards comprising plant fibers such as flax fiberboards, flax shive boards, hemp fiberboards, bamboo fiberboards. In this case, these fibers are, for example, flax fibers, hemp fibers, bamboo fibers. All the above-described embodiments for the process for the production of a wood fiberboard as described for the first aspect according to the invention, and this being without the steps that are specific to the production of new wood fiberboards and without requiring the specific use of recycled wood fiberboards, are therefore applicable to this process for the production of fiber-comprising elements. The embodiments of the first aspect are therefore applicable, mutatis mutandis, to this divergent variant.

According to a fourth aspect, the invention relates to a process for the production of a cellulose-containing element, preferably a board such as a chipboard, wherein the process comprises the step in which refined material from recycled cellulose-containing elements - preferably from recycled chipboards - is wetted, heated and pressurized using steam;
wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
wherein, after this pressure reduction, the material is transformed into recycled cellulose-containing components, possibly with a fraction of clumps and any other impurities; wherein this process comprises the step of supplying the recycled cellulose-containing components as feedstock in a production line - for example in a dry production process - for producing cellulose-containing elements. Preferably, the cellulose-containing element is a chipboard, and use is therefore preferably made of recycled chipboards in order to form this chipboard. Another example of a cellulose-containing element is OSB (oriented strand board), use then preferably being made of recycled OSB. All the above-described embodiments for the process for the production of a wood fiberboard as described for the first aspect according to the invention, and this being without the steps that are specific to the production of new wood fiberboards and without requiring the specific use of recycled wood fiberboards, are therefore applicable to this process for the production of cellulose-containing elements. The embodiments of the first aspect are therefore applicable, mutatis mutandis, to the fourth aspect.

In a very preferred embodiment, the cellulose-containing element is a chipboard comprising at least three layers, namely two outer layers and at least one central layer, wherein the refined material from recycled cellulose-containing elements is refined material from recycled chipboards and the recycled cellulose-containing elements formed are recycled wood chips, and wherein these recycled wood chips are added during the step of supplying the recycled wood chips as feedstock in a production line for producing chipboards, for example are at least added for the formation of said central layer. The quality of the recycled wood chips produced, which have been subjected to the aforementioned treatment with steam, temperature and pressure, is very high, as a result of which they are definitely usable for the central layer. In fact, the quality is high enough for forming the outer layer. For example, the recycled wood chips may also be added as feedstock in a production line for producing chipboards, and for the purpose of forming one or both outer layers.

In a specific embodiment, the outer layers comprise recycled wood chips which have been subjected to the above-described treatment, and the one or more central layers comprise refined material from recycled wood chips which have not been subjected to the aforementioned treatment. The quality of the recycled wood chips can be lower for the central layer. Further preferably, the chipboard comprises only recycled wood chips or at least 90 percent by weight, preferably at least 95 percent by weight, of recycled wood chips in relation to the total weight of wood chips. In this way, a very ecological chipboard is obtained.

In a specific embodiment, the recycled wood chips which have been subjected to the aforementioned treatment prior to the step of supplying the recycled wood chips as feedstock in a production line are separated on the basis of size, using a sieve, for example. In this way, it is possible to opt to add smaller recycled wood chips to a said outer layer and to add larger recycled wood chips to a said central layer.

Preferably, the wood chips from the recycled chipboards introduced are glued using urea-formaldehyde adhesive or using melamine-urea-formaldehyde adhesive, preferably a melamine-urea-formaldehyde adhesive having a melamine mass percentage in the adhesive of less than 15%, preferably of less than 12%, or using a bioadhesive, or using MDI (methylene diphenyl diisocyanate)-based or pMDI (polymeric methylene diphenyl diisocyanate)-based adhesives. The bioadhesive is for example based on sugars and/or amines, or is for example based on lignin or is for example based on highly branched amides or is for example based on starch. Bioadhesives can be used to form very ecological chipboards. If the recycled chipboards introduced do not comprise, or do not all comprise, a bioadhesive, it is possible to opt to add only bioadhesive for producing the new chipboards. Preferably, the adhesive used to form the new chipboards is of the same type as the adhesive of the recycled chipboards.

With a view to providing a better illustration of the characteristic features of the invention, the following text describes a number of preferred embodiments by way of example, without any limiting character, with reference to the appended drawings, in which:
figure 1 illustrates an example of an embodiment of the process according to the invention for the production of a wood fiberboard;
figure 2 shows a pressure vessel as can be used in embodiments of the invention;
figure 3 illustrates characteristic features of a preferred embodiment of the invention; and
figure 4 illustrates an example of an MDF board manufactured by a process according to the invention;
figure 5 illustrates another example of an embodiment of the process according to the invention for the production of a wood fiberboard;
figure 6 illustrates yet another example of an embodiment of the process according to the invention for the production of a wood fiberboard;
figure 7 shows a pressure vessel as can be used in embodiments of the invention.

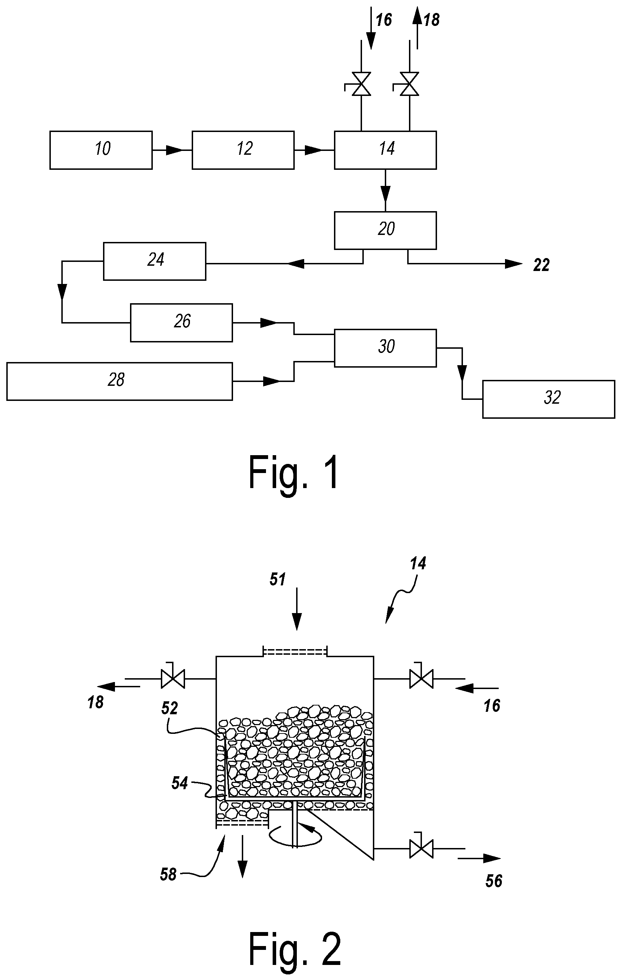

Figure 1 illustrates an example of the process according to the invention for the production of a wood fiberboard. Refined material from recycled wood fiberboards is introduced into a pressure vessel 14 via a dosing installation 10 and a weighing device 12. Saturated steam is supplied via pipeline 16, as a result of which the refined material from recycled wood fiberboards is wetted, heated and pressurized. This material is then kept under pressure and temperature in the pressure vessel 14 for a certain amount of time. This is followed by the reduction of the pressure of this material by at least 3 bar, and preferably by at least 5 bar, more preferably by at least 7 bar; more preferably by at least 10 bar, more preferably by at least 11 bar; via valve 18. After this reduction of the pressure, the recycled wood fibers obtained and possibly a fraction of wood fiber clumps and any other impurities are removed from the pressure vessel 14. In a separating-off device 20, for example in a wind sifter, wood fiber clumps and any other impurities are separated off, via 22, from the recycled wood fibers. The recycled wood fibers are brought into a buffer box 24. The recycled wood fibers are conveyed onward in a metered manner by means of a fan 26. In parallel with these described steps, new wood fibers are produced from new or from recycled wood in installation 28. These new wood fibers are treated with adhesive. The recycled wood fibers and the new, adhesive-treated wood fibers are brought into a turbulent, hot air flow 30; where the recycled wood fibers and the new, adhesive-treated wood fibers are mixed thoroughly, dried and conveyed. The fiber mixture of recycled wood fibers and new wood fibers is subsequently introduced in a continuous manner into a production line 32 for producing wood fiberboard according to a dry process.

In this example of figure 1, the recycled wood fibers, in a non-adhesive-treated state, are mixed with the new, adhesive-treated wood fibers. A certain degree of exchange of adhesive from the new, adhesive-treated wood fibers to the non-adhesive-treated recycled wood fibers may occur in the turbulent air flow 30. However, it is also possible to treat the recycled wood fibers with adhesive prior to the mixing with the new, adhesive-treated wood fibers; or to treat recycled wood fibers with adhesive in the same process as, and together with, the treating of the new wood fibers with adhesive.

The production of the recycled wood fibers as illustrated in figure 1 is a batch process, which is carried out in-line with the continuous production of new fibers in installation 28 and the continuous production of wood fiberboard in production line 32. However, it is also possible for the production of the recycled wood fibers according to the invention to also be carried out continuously.

Figure 2 shows a pressure vessel 14 as can be used in embodiments of the invention, for example in the process as outlined in figure 1. The pressure vessel comprises an infeed opening 51 for the loading of refined material 52 from recycled wood fiberboards. This infeed opening 51 can be closed. Saturated steam is supplied via pipeline 16, as a result of which the refined material from recycled wood fiberboards is wetted, heated and pressurized. The refined material 52 is kept under pressure and temperature in the pressure vessel 14 for a certain amount of time. During this time period, the refined material 52 is stirred by means of a stirring mechanism 54, as a result of which the steam treatment runs more efficiently.

Liquid water is discharged via discharge line 56 continuously or periodically during the step in which refined material from recycled wood fiberboards is wetted, heated and pressurized using steam; and/or continuously or periodically during the step in which this material is kept under pressure and temperature for a certain amount of time.

The step in which the refined material is kept under pressure and temperature for a certain amount of time is followed by the step of reducing the pressure of this material by at least 3 bar, and preferably by at least 5 bar, more preferably by at least 7 bar; more preferably by at least 10 bar, more preferably by at least 11 bar, by releasing the pressure via valve 18. After this pressure reduction, the material which has been transformed into recycled wood fibers, possibly with a fraction of wood fiber clumps and any other impurities, is unloaded from the pressure vessel 14 via discharge opening 58.

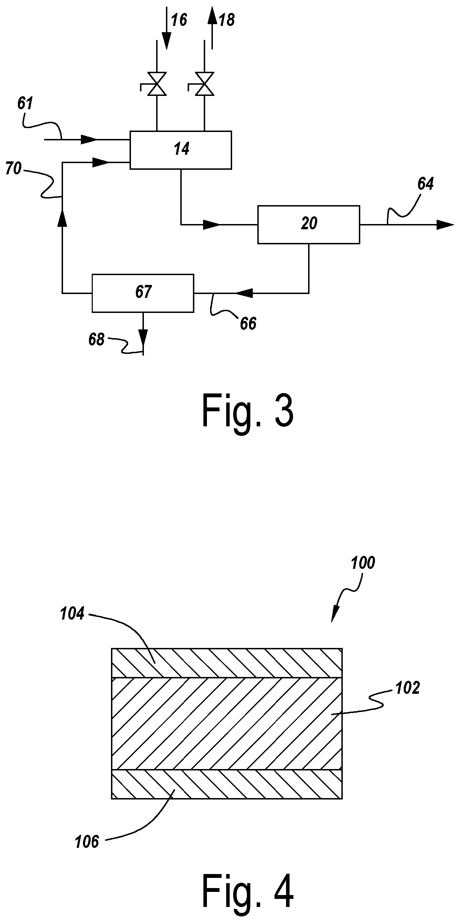

Figure 3 illustrates characteristic features of a preferred embodiment of the invention, more specifically of an embodiment in which fiber clumps which are separated off in the process are reintroduced into the process together with a new load of refined wood fiberboard. The embodiment illustrated in figure 3 can be incorporated in the process of figure 1. Refined material from recycled wood fiberboards is introduced into pressure vessel 14 via supply 61. This may for example be a pressure vessel as illustrated in figure 2. The reference numerals not mentioned here therefore have the same meaning as in figure 2.

After the pressure reduction step, the recycled wood fibers produced and any wood fiber clumps and any other impurities are brought to a separating-off installation 20, in which the wood fiber clumps and any other impurities are discharged via discharge 66. The recycled wood fibers are conveyed via discharge 64 for further processing in a production line of wood fiberboards.

In a second separating-off installation 67, the other impurities can be separated off from the wood fiber clumps and discharged via 68. The wood fiber clumps are then fed back into the pressure vessel 14 via supply 70, together with refined wood fiberboard 61. In this way, wood fiber clumps can still be transformed into wood fibers, such that a maximum yield from the process is obtained.

In an example of the process of the invention, refined material from recycled wood fiberboards which were glued using urea-formaldehyde adhesive was introduced into a pressure vessel as in figure 2. In a time span of 15 seconds, this material was wetted, heated and brought to a pressure of 10 bar using saturated steam at 10 bar. The material was kept at a pressure of 10 bar, at the corresponding temperature of saturated steam at 10 bar, for 60 seconds. This was followed by the step of reducing the pressure of this material to atmospheric pressure; this pressure reduction was carried out in 20 seconds. After this step, the material was removed from the pressure vessel. The material was transformed into recycled wood fibers, still with a fiber clump mass percentage of 0.6 percent with respect to the total quantity of material.

Figure 4 illustrates an example of an MDF board 100 manufactured by a process according to the invention. The MDF board 100 produced is composed of three layers. More particularly, this MDF board is composed of a core layer 102. There is a surface layer 104, 106 on both sides of the core layer 102. The two surface layers 104, 106 comprise no recycled wood fibers, but only wood fibers produced from new and/or from recycled wood. The core layer 102 comprises both wood fibers which were produced from new and/or from recycled wood and which were treated with adhesive, and recycled wood fibers obtained from MDF and/or HDF board material. These recycled wood fibers may or may not be treated with adhesive during the production process of the recycled fibers in the production process of the MDF board 100. It is possible for a decorative or functional layer to be applied on one or both surface layers, for example a printed layer of paper soaked in melamine resin and pressed onto the MDF board.

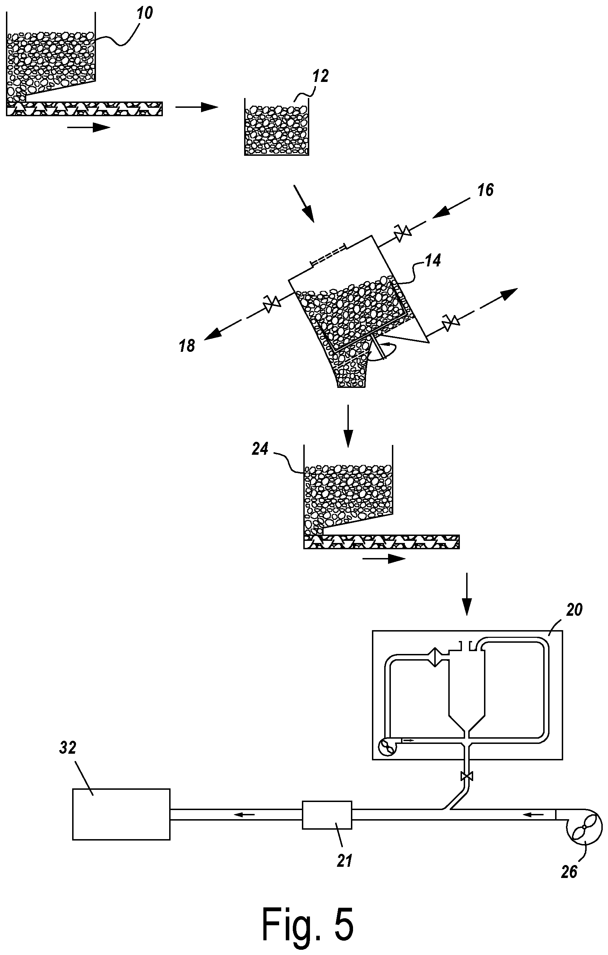

Figure 5 illustrates an example of the process according to the invention for the production of a wood fiberboard. Refined material from recycled wood fiberboards is brought to a weighing device 12 via a dosing installation 10 and a closed conveyor belt, and from there is introduced into a pressure vessel 14. This refined material may be derived from the separate production of, for example, MDF/HDF, that is to say production waste, but this refined material may also be derived from end-of-life products, such as MDF/HDF boards, melamine-coated MDF/HDF boards such as furniture panels or from laminate such as floor panels. Saturated steam is supplied via pipeline 16, as a result of which the refined material from recycled wood fiberboards is wetted, heated and pressurized. This material is then kept under pressure and temperature in the pressure vessel 14 for a certain amount of time. This is followed by the reduction of the pressure of this material by at least 3 bar, and preferably by at least 5 bar, more preferably by at least 7 bar; more preferably by at least 10 bar, more preferably by at least 11 bar; via valve 18. The liquid water, that is to say the condensate, is discharged via a discharge pipeline 56. After this reduction of the pressure, the recycled wood fibers obtained and possibly a fraction of wood fiber clumps and any other impurities, such as, for example, paper, are removed from the pressure vessel 14. After the pressure vessel 14, there follows optionally a buffer box 24 and optionally a separating-off device 20, for example a wind sifter. Using the separating-off device 20, wood fiber clumps and any other impurities are separated off from the recycled wood fibers. This separating-off device 20 can be optional. If more or less no wood fiber clumps and/or other impurities are expected, given that operation is performed only with separate production waste, for example, it is possible for a separating-off device 20 to not be used. The recycled wood fibers are conveyed onward in a metered manner by means of a fan 26 and treated with adhesive using an adhesive-coater 21. The treating with adhesive may take place under atmospheric pressure, but may also take place at a higher pressure. The adhesive-treated recycled wood fibers and any new, adhesive-treated wood fibers are subsequently introduced in a continuous manner into a production line 32 for producing wood fiberboard according to a dry process. The recycled wood fibers may or may not be treated with adhesive together with the new wood fibers.

The production of the recycled wood fibers as illustrated in figure 5 is a batch process, which is carried out in-line with the continuous production of wood fiberboard in production line 32.

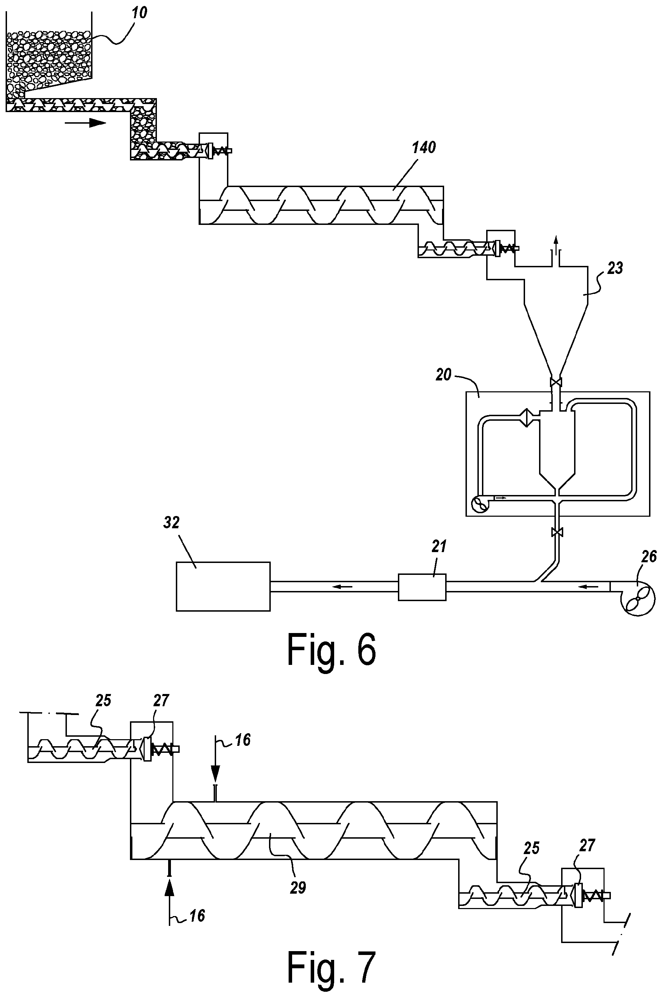

Figure 6 illustrates an example of the process according to the invention for the production of a wood fiberboard. Refined material from recycled wood fiberboards is introduced into a pressure vessel 140 via a dosing installation 10 and a closed conveyor belt or conveyor screw. In this case, this process is a continuous process, such that introduction into the pressure vessel 140 can be performed in a continuous manner and a weighing device, as illustrated in figure 5, is not necessary. This refined material may be derived from the separate production of, for example, MDF/HDF, that is to say production waste, but this refined material may also be derived from end-of-life products, such as MDF/HDF boards, melamine-coated MDF/HDF boards such as furniture panels or from laminate such as floor panels. The pressure vessel itself is kept at a continuous average pressure of at least 5 bar, at least 7 bar, at least 10 bar and most preferably at least 11 bar, wherein the pressure difference throughout the process between the highest and the lowest pressure is less than 1 bar, preferably is less than 0.5 bar and even more preferably is less than 0.2 bar. For this, the pressure vessel comprises an inlet and an outlet and an internal screw 29 for displacing the material from the inlet to the outlet. The refined material is brought to the inlet by means of a screw 25, wherein this inlet is closed using a closure element which is movable back and forth, such as a closure cone 27, in order to thus introduce refined material into the pressure vessel 140 with a minimum amount of pressure loss. There is also a similar closure cone 27 and a screw 25 at the outlet, wherein this last-mentioned screw 25 brings the material to the outlet. Saturated steam is supplied into the pressure vessel 140, as a result of which the refined material from recycled wood fiberboards is wetted, heated and pressurized. This material is then kept under pressure and temperature in the pressure vessel 140 for a certain amount of time, determined by the speed of the internal screw 29. By bringing the material through the outlet, it experiences a pressure drop of at least 3 bar, and preferably by at least 5 bar, more preferably by at least 7 bar; more preferably by at least 10 bar, more preferably by at least 11 bar. The outlet is in contact with a vessel which is followed by an optional cyclone 23; and the cyclone 23 is followed by an optional wind sifter 20. The pressure in this last-mentioned vessel is preferably more or less atmospheric pressure, higher pressures such as, for example, 2 bar, 4 bar, etc. are also possible. The separation between the recycled wood fibers obtained and possibly a fraction of wood fiber clumps and any other impurities, such as, for example, paper, is effected at the cyclone 23 and wind sifter 20. This cyclone 23 and wind sifter 20 can be optional. If more or less no wood fiber clumps and/or other impurities are expected, given that operation is performed only with own production waste, for example, it is possible for a wind sifter 20 and/or a cyclone 23 to not be used. The recycled wood fibers are conveyed onward in a metered manner by means of a fan 26 and treated with adhesive using an adhesive-coater 21. The adhesive-treated recycled wood fibers and any new, adhesive-treated wood fibers are subsequently introduced in a continuous manner into a production line 32 for producing wood fiberboard according to a dry process. The recycled wood fibers may or may not be treated with adhesive together with the new wood fibers.

The production of the recycled wood fibers as illustrated in figure 6 is a continuous process, which forms part of the continuous production of wood fiberboard in production line 32.

Figure 7 shows a pressure vessel 140 as can be used in embodiments of the invention, for example in the process as outlined in figure 6. The pressure vessel 140 comprises an infeed opening/inlet for the loading of refined material 52 from recycled wood fiberboards. This infeed opening is closed by means of a pressure closure, wherein this pressure closure is for example configured as illustrated above and in the figure with a screw 25 and a closure cone 27. Other closures are of course possible, as long as they allow refined material to be introduced with only a little pressure loss. The pressure vessel 140 further comprises an outfeed opening/outlet which is closed by means of a pressure closure, wherein this pressure closure is for example configured as illustrated above and in the figure with a screw 25 and a closure cone 27. Other closures are of course possible, as long as they allow refined material to be discharged with only a little pressure loss. Saturated steam is supplied via pipeline 16, as a result of which the refined material from recycled wood fiberboards is wetted, heated and pressurized. The refined material 52 is kept under pressure and temperature in the pressure vessel 140 for a certain amount of time, wherein this time is dependent on the speed of the stirring mechanism present in the pressure vessel, that is to say in this case a screw 29 which extends between the infeed opening and the outfeed opening. The infeed opening and the outfeed opening are preferably of more or less equal size, for example have the same diameter.

The present invention is by no means limited to the above-described embodiments, but the process may be carried out according to different variants without departing from the scope of the present invention.

The invention further relates to various embodiments as identified by the numbered paragraphs below.
1.- Process for the production of a wood fiberboard, preferably for the production of an MDF or HDF board,
   wherein the process comprises the step in which refined material from recycled wood fiberboards - preferably from recycled MDF or HDF boards - is wetted, heated and pressurized using steam;
   wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
   wherein, after this pressure reduction, the material is transformed into recycled wood fibers, possibly with a fraction of wood fiber clumps and any other impurities;
   wherein this process comprises the step of supplying the recycled wood fibers as feedstock in a production line - preferably in a dry production process - for producing wood fiberboard, preferably for producing MDF or HDF boards.
2.- Process as in paragraph 1, characterized in that the quantity of wood fiber clumps in the material immediately after the pressure reduction is less than 5 percent by weight, preferably less than 3 percent by weight, more preferably less than 2 percent by weight and even more preferably less than 1 percent by weight.
3.- Process as in either one of the preceding paragraphs, characterized in that in the step in which refined material from recycled wood fiberboards is wetted, heated and pressurized using steam; this material is brought to a pressure of at least 4 bar, preferably of at least 6 bar, more preferably of at least 7 bar, more preferably of at least 10 bar, more preferably of at least 11 bar.
4.- Process as in any one of the preceding paragraphs, characterized in that in the step in which refined material from recycled wood fiberboards is wetted, heated and pressurized using steam; this material is brought to a pressure of at least 12 bar.
5.- Process as in any one of the preceding paragraphs, characterized in that liquid water is continuously or periodically discharged during or after the step of reducing the pressure; and/or during the step in which refined material from recycled wood fiberboards is wetted, heated and pressurized using steam; and/or during the step in which this material is kept under pressure and temperature for a certain amount of time.
6.- Process as in any one of the preceding paragraphs, characterized in that, after the step of reducing the pressure, the recycled wood fibers have a moisture content of between 3 and 20 percent by weight, preferably of between 5 and 15 percent by weight.
7.- Process as in paragraph 6, characterized in that the moisture content of the recycled wood fibers is measured continuously or periodically using a measuring device, and based upon the obtained results measured by the measuring device, water may or may not be added to the process to change the moisture content.
8.- Process as in any one of the preceding paragraphs, characterized in that, after the pressure reduction step and prior to the step of supplying the recycled wood fibers in the production line for producing wood fiberboard, the process comprises the step of separating off wood fiber clumps and any other impurities from the transformed material, preferably wherein the separating makes use of the difference in mass between, on the one hand, the wood fibers and, on the other hand, wood fiber clumps and any other impurities.
9.- Process as in paragraph 8, characterized in that in the step of separating off wood fiber clumps and any other impurities from the transformed material, use is made of one or more of a sieving operation, a wind sifter, a zigzag sifter or a 3D sieve.
10.- Process as in any one of the preceding paragraphs 8 - 9, characterized in that at least a portion - and preferably the entire quantity - of the separated wood fiber clumps are reintroduced into the process so that these separated wood fiber clumps are wetted, heated and pressurized using steam together with newly introduced refined material from recycled wood fiberboards - preferably from recycled MDF or HDF boards.
11.- Process as in any one of the preceding paragraphs, characterized in that the period of time from starting the step in which refined material from recycled wood fiberboards is wetted, heated and pressurized using steam; to the beginning of the step of reducing the pressure of this material by at least 3 bar, and preferably by at least 5 bar, more preferably by at least 7 bar; more preferably by at least 10 bar, more preferably by at least 11 bar; is less than 5 minutes, is preferably less than 3 minutes, is more preferably less than 2 minutes, is more preferably less than 90 seconds, and is more preferably more than 60 seconds.
12.- Process as in any one of the preceding paragraphs, characterized in that the duration of the step in which refined material from recycled wood fiberboards is wetted, heated and pressurized using steam is at most 20 seconds.
13.- Process as in any one of the preceding paragraphs, characterized in that the step of reducing the pressure of the material is carried out in a time span of less than 1 minute, preferably of less than 45 seconds; but, for example, in a time span of at least 15 seconds, more preferably of at least 20 seconds.
14.- Process as in any one of the preceding paragraphs, characterized in that, in the recycled wood fiberboards introduced, the wood fibers are glued using urea-formaldehyde adhesive or using melamine-urea-formaldehyde adhesive, preferably a melamine-urea-formaldehyde adhesive having a melamine mass percentage in the adhesive of less than 15%, or using a bioadhesive, or using MDI-based or pMDI-based adhesives.
15.- Process as in any one of the preceding paragraphs, characterized in that the process comprises the step of mechanically breaking down recycled wood fiberboards to obtain the refined material from recycled wood fiberboards, preferably to form refined material having an average size according to numbers of less than 10 cubic centimeters, more preferably less than 5 cubic centimeters, more preferably less than 3 cubic centimeters.
16.- Process as in paragraph 15, characterized in that dust is separated off after the mechanical breaking down, for example by means of sieving, by means of rinsing with water or by means of wind sifting.
17.- Process as in any one of the preceding paragraphs 15 - 16, characterized in that this mechanical breaking down is carried out in a dry state of the recycled wood fiberboards, wherein in a dry state means that this mechanical refining is not preceded by a wetting step.
18.- Process as in any one of the preceding paragraphs, characterized in that in the step in which refined material from recycled wood fiberboards is wetted, heated and pressurized using steam, the wetting is effected with addition of additives, for example of surfactants, of one or more acids, or of one or more bases; or wherein this wetting in this step is effected without addition of additives.
19.- Process as in any one of the preceding paragraphs, characterized in that in the step in which refined material from recycled wood fiberboards is wetted, heated and pressurized using steam, preferably using saturated steam, the refined material is heated to a temperature lower than 240°C, preferably lower than 230°C; and preferably higher than 130°C, and more preferably higher than 150°C, preferably higher than 170°C.
20.- Process as in any one of the preceding paragraphs, characterized in that in the step in which this material is kept under pressure and temperature for a certain amount of time, the refined material is kept at an absolute pressure of at least 12 bar for a period of at least 15 seconds, preferably of at least 30 seconds, preferably of at least one minute, preferably less than 5 minutes, more preferably less than 3 minutes and more preferably less than 2 minutes.
21.- Process as in paragraph 20, characterized in that in the step in which this material is kept under pressure and temperature for a certain amount of time, the refined material is kept at a temperature lower than 240°C, more preferably lower than 230°C; and preferably higher than 150°C, and preferably higher than 180°C.
22.- Process as in any one of the preceding paragraphs, characterized in that in the step in which refined material from recycled wood fiberboards is wetted, heated and pressurized using steam, the heating is achieved using steam by means of steam injection - preferably by means of saturated steam or by means of wet steam - in the process equipment which comprises or conveys the refined material from recycled wood fiberboards; optionally wherein additives - for example surfactants, one or more acids or one or more bases - are added, or optionally wherein no additives are added.
23.- Process as in paragraph 22, characterized in that the heating using steam is achieved by introducing the refined material from recycled wood fiberboards into a pressure vessel - preferably a pressure vessel with continuous flow or a discontinuous pressure vessel -; and injecting steam - preferably saturated steam or wet steam - into this pressure vessel; optionally wherein additives - for example surfactants, one or more acids or one or more bases - are added; or optionally wherein no additives are added.
24.- Process as in paragraph 23, characterized in that the recycled wood fibers, possibly with a fraction of wood fiber clumps and any other impurities, are removed from the pressure vessel by means of a screw.
25.- Process as in any one of the preceding paragraphs 1 - 24, characterized in that, after the step of reducing the pressure of the material, this material is no longer conducted through a mechanically operating apparatus which would mechanically refine this material and/or no further mechanical refining of this material takes place.
26.- Process as in any one of the preceding paragraphs 1 - 24, characterized in that, after the step of reducing the pressure of the material, this material is subjected to another step in which the material is mechanically refined, preferably due to the fact that the material is treated by means of one or more rolls provided with pins or teeth.
27.- Process as in any one of the preceding paragraphs, characterized in that the steps in which refined material from recycled wood fiberboards is wetted, heated and pressurized using steam; and/or in which this material is kept under pressure and temperature for a certain amount of time, and/or in which the pressure of the material is reduced, are carried out in batch.
28.- Process as in paragraph 27, characterized in that this batch process is carried out in a receptacle, wherein this receptacle comprises a stirring mechanism, wherein this stirring mechanism mixes the refined material in the receptacle at least for a portion of the time period - and preferably for the entire time period - in which refined material from recycled wood fiberboards is being wetted, heated and pressurized using steam and is being kept under pressure.
29.- Process in accordance with paragraph 27 or 28, characterized in that this batch process is carried out in a receptacle, wherein liquid water is continuously or periodically discharged from this receptacle.
30.- Process as in any one of the preceding paragraphs 1 - 26, characterized in that the steps in which refined material from recycled wood fiberboards is wetted, heated and pressurized using steam; and/or in which this material is kept under pressure and temperature for a certain amount of time, and/or in which the pressure of the material is reduced; are carried out in a continuous process.
31.- Process as in paragraph 30, characterized in that the heating using steam is achieved by introducing the refined material from recycled wood fiberboards into a pressure vessel, the pressure vessel has a continuous flow, and in that the pressure during the process in this pressure vessel is kept more or less constant, that is to say that the pressure difference between the highest pressure and the lowest pressure in this pressure vessel during the process is preferably less than 1 bar, even more preferably less than 0.5 bar, most preferably less than 0.3 bar.
32.- Process as in paragraph 30 or 31, wherein the step in which the pressure of the material is reduced takes place in a receiving unit comprising, for example, a vessel, wherein liquid water is continuously or periodically discharged from this receiving unit and wherein preferably the receiving unit has a continuous flow.
33.- Process as in paragraph 32, wherein the receiving unit comprises a vessel and the pressure in the pressure vessel is higher than the pressure in said vessel of the receiving unit, wherein preferably the pressure in this vessel is more or less constant, that is to say that the pressure difference in this vessel between the highest pressure and the lowest pressure during the process is preferably less than 0.5 bar, even more preferably less than 0.2 bar, most preferably less than 0.1 bar.
34.- Process as in paragraph 32 or 33, wherein the receiving unit comprises a separating device for separating recycled wood fibers, possibly with a fraction of wood fiber clumps and any other impurities, from the water.
35.- Process as in any one of the preceding paragraphs, characterized in that the recycled wood fibers, without them having been treated with adhesive in advance, are mixed with adhesive-treated wood fibers - preferably with newly produced adhesive-treated wood fibers -; and are introduced as feedstock in the production line for producing wood fiberboard;
   preferably wherein the mass percentage of recycled wood fibers in the combination of the recycled wood fibers and the adhesive-treated wood fibers is less than 20, more preferably less than 10 and more preferably less than 5.
36.- Process as in any one of the preceding paragraphs 1 - 34, characterized in that the recycled wood fibers are treated with adhesive, preferably using urea-formaldehyde adhesive, using melamine-urea-formaldehyde adhesive, using phenol adhesive, or using MDI or pMDI adhesive, or using bioadhesive, or using adhesive compositions which comprise one or more of the adhesives mentioned.
37.- Process as in paragraph 36, characterized in that the recycled wood fibers are treated with adhesive together with new wood fibers.
38.- Process as in paragraph 36, characterized in that new wood fibers are treated with adhesive in a step which is separate from the step of treating the recycled wood fibers with adhesive.
39.- Process as in any one of the preceding paragraphs 36 - 38, characterized in that the recycled wood fibers are treated with adhesive by introducing the recycled wood fibers into a pneumatic flow and injecting adhesive into this flow, preferably together with hardeners and/or preferably with additives such as, for example, paraffin or wax.
40.- Process as in any one of the preceding paragraphs, characterized in that the recycled wood fibers - which may or may not be treated with adhesive - are conveyed in a - preferably hot - turbulent air flow.
41.- Process as in paragraph 40, characterized in that new, adhesive-treated wood fibers are introduced into this - preferably hot - turbulent air flow, such that the recycled wood fibers are conveyed together with new, adhesive-treated wood fibers in this turbulent air flow.
42.- Process as in any one of the preceding paragraphs 40 - 41, characterized in that the conveyance in the turbulent air flow is followed by one or more separation units, for example for separating off water vapor and hot gases - for example by means of a cyclone or a wind sifter - and/or for separating off heavy constituents - preferably by means of gravity.
43.- Process as in any one of the preceding paragraphs, characterized in that, in the step of supplying the recycled wood fibers in the production line for producing wood fiberboard, in addition to recycled wood fibers, new, adhesive-treated wood fibers are also used as feedstock;
   preferably wherein, for this production step, step of supplying the recycled wood fibers in the production line, the recycled wood fibers are mixed with the new, adhesive-treated wood fibers; more preferably wherein this mixing is effected before, in or after the blowline which pneumatically conveys the new, adhesive-treated wood fibers to the step of production of the wood fiberboard.
44.- Process as in paragraph 43, characterized in that the - either adhesive-treated or non-adhesive-treated - recycled wood fibers are mixed with the new, adhesive-treated wood fibers; and in that a drying operation is carried out on the mixture of the recycled wood fibers and the new, adhesive-treated wood fibers; preferably wherein the drying operation is carried out while the mixture of the recycled wood fibers and the new, adhesive-treated wood fibers are being conveyed in a turbulent air flow.
45.- Process as in any one of the preceding paragraphs 43 - 44, characterized in that the proportion of recycled wood fibers in the sum of recycled wood fibers and new, adhesive-treated wood fibers is less than 50 percent by weight; and preferably less than 20 percent by weight; and preferably less than 5 percent by weight, if use is made of non-adhesive-treated recycled wood fibers.
46.- Process as in any one of the preceding paragraphs 43 - 45, characterized in that the weight percentage of recycled wood fibers with respect to the total of the recycled wood fibers and the new, adhesive-treated wood fibers is constant through the thickness of the wood fiberboard produced.
47.- Process as in any one of the preceding paragraphs 43 - 45, characterized in that the wood fiberboard produced is built up in multiple layers; and wherein at least one of the surface layers - and preferably the surface layers on both sides of the wood fiberboard produced - comprises a lower mass percentage of recycled wood fibers than at least one other layer of the board; preferably the at least one surface layer - and more preferably the surface layers on both sides of the board produced - comprise no recycled wood fibers.
48.- Process as in any one of the preceding paragraphs 1 - 42, characterized in that in the step of the production process of the wood fiberboard, only the recycled wood fibers are used as wood-comprising feedstock.
49.- Process as in any one of the preceding paragraphs, characterized in that the following steps are carried out in-line - and preferably continuously:
   - optionally the step of mechanically breaking down recycled wood fiberboards to obtain refined material from recycled wood fiberboards, preferably to form refined material having an average size according to numbers of less than 10 cubic centimeters, more preferably less than 5 cubic centimeters, more preferably less than 3 cubic centimeters;-the step in which refined material from recycled wood fiberboards is wetted, heated and pressurized using steam;
   - the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
   - the pressure reduction, after which the material is transformed into recycled wood fibers, possibly with a fraction of wood fiber clumps and impurities;
   - optionally the step of separating off wood fiber clumps and any other impurities from the transformed material; and
   - the step of supplying the recycled wood fibers in a production line - preferably in a dry production process - for producing wood fiberboard, preferably for producing MDF or HDF boards.
50.- Process as in any one of the preceding paragraphs, characterized in that the recycled wood fiberboards entirely or partly concern production waste or production losses, optionally in that the recycled wood fiberboards come from a process for the production of wood fiberboard as described in any one of the preceding paragraphs; and/or wherein the recycled wood fiberboards comprise or concern post-consumer wood fiberboards.
51.- Process as in any one of the preceding paragraphs, characterized in that, in the step of supplying the recycled wood fibers for producing wood fiberboard, in addition to recycled wood fibers, new, adhesive-treated wood fibers are also used as feedstock; preferably wherein the recycled wood fibers are, on average, finer and/or shorter than the new wood fibers, preferably wherein, for this production step, the recycled fibers are mixed with the new, adhesive-treated wood fibers.
52.- Process as in any one of the preceding paragraphs 50 - 51, characterized in that the parameters of the process - for example pressure, temperature, duration for which the material is kept at temperature and pressure and the speed with which the pressure is reduced - for producing recycled wood fibers are set in such a way, and/or the recycled wood fiberboards are selected in such a way, that the recycled wood fibers have an average length which deviates from the average length of the new, adhesive-treated wood fibers by at most 20% - and preferably by at most 10%.
53.- Process as in any one of the preceding paragraphs 51 - 52, characterized in that, in an in-line process parallel with the process in which the recycled wood fibers are obtained, the new, adhesive-treated wood fibers are produced from new and/or from recycled wood.
54.- Process as in paragraph 53, characterized in that the process for producing new, adhesive-treated wood fibers comprises the step of mechanically refining the new and/or recycled wood, preferably by means of rotating disks between which the material is guided, more preferably by a "refiner".
55.- Process as in any one of the preceding paragraphs 53 - 54, characterized in that
   - the process for producing new, adhesive-treated wood fibers comprises the step of mechanically refining the new and/or the recycled wood, in which case the new wood fibers are produced, preferably by means of rotating disks between which the material is guided, more preferably by a "refiner"; and in that
   - the process for producing the recycled wood fibers comprises the step of mechanically refining the recycled wood fibers produced, preferably by means of rotating disks between which the material is guided, more preferably by a "refiner".
56.- Process as in paragraph 55, characterized in that the mechanical refining of the recycled wood fibers and the mechanical refining in which the new wood fibers are produced are separate processes, preferably carried out in parallel with one another.
57.- Process as in any one of the preceding paragraphs 55 - 56, characterized in that the consumed mechanical energy per ton of new wood fibers produced in the step of mechanical refining for the production of new wood fibers is greater - and preferably at least 20% greater, more preferably at least 50% greater - than the consumed mechanical energy per ton of recycled wood fibers produced in the step of mechanically refining the recycled wood fibers.
58.- Process as in any one of the preceding paragraphs, characterized in that, in the production line for producing the wood fiberboard, the wood fiberboard is produced via a dry production process, in which recycled wood fibers - and optionally new, adhesive-treated wood fibers - are deposited on a conveyor belt, wherein a wood fiber mat is formed, wherein this wood fiber mat is compressed - preferably at ambient temperature - in a first - preferably continuous - pressing operation, after which the wood fiberboard is obtained in a second - preferably continuous - pressing operation under elevated temperature and pressure.
59.- Process as in paragraph 58, characterized in that the depositing of the wood fibers, the first pressing operation and the second pressing operation are carried out in-line and continuously.
60.- Process as in any one of the preceding paragraphs, characterized in that the wood fiberboard produced has an average density of more than 500 kg/m³, preferably of more than 750 kg/m³.
61.- Process as in paragraph 60, characterized in that the wood fiberboard produced has, on both sides of the board, close to the surface of the board, a zone of higher density than the average density of the board, preferably wherein this zone of higher density comprises at least one sub-zone which has an average density of more than 900 kg/m³, more preferably of more than 1000 kg/m³.
62.- Process as in any one of the preceding paragraphs, characterized in that, during the step of reducing the pressure of the refined material from recycled wood fiberboards, steam explosion occurs in this material.
63.- Process as in paragraph 62, characterized in that the steam explosion is carried out by pressing the material through an opening, the material ending up in an environment of lower pressure, as a result of which a rapid pressure drop in the material occurs, thus causing the steam explosion.
64.- Process as in any one of paragraphs 62 - 63, characterized in that the steam explosion is carried out after the material has been conveyed in a screw, preferably the steam explosion takes place at the outlet of the screw.
65.- Process as in paragraph 64, characterized in that the screw is configured in such a way that the material in the screw is mechanically compressed.
66.- Process as in any one of the preceding paragraphs 64 - 65, characterized in that steam - preferably saturated steam or wet steam - is injected into the screw; preferably wherein additives - for example surfactants, one or more acids or one or more bases - are added; or wherein no additives are added.
67.- Process as in any one of the preceding paragraphs 62 - 66, characterized in that the steam explosion takes place in a continuous process, or wherein the steam explosion takes place in a discontinuous process - for example by using a pressure vessel.
68.- Process as in any one of the preceding paragraphs 62 - 66, characterized in that the steam explosion step is carried out in a discontinuous process, wherein the wetted, heated and pressurized material is located in a receptacle, and wherein a flap or valve of the receptacle is opened, as a result of which the sudden pressure drop occurs which causes the steam explosion.
69.- Process as in any one of the preceding paragraphs 62 - 68, characterized in that the pressure drop during the steam explosion is at least 3 bar, and preferably at least 5 bar, more preferably at least 7 bar; more preferably at least 10 bar, more preferably at least 11 bar.
70.- Process as in any one of the preceding paragraphs 62 - 69, characterized in that, during the steam explosion, the pressure expands to below 3 bar absolute; preferably wherein the pressure expands to below 2 bar absolute, more preferably wherein the pressure expands to below 1.5 bar absolute, preferably wherein the pressure expands to atmospheric pressure.
71.- Process as in any one of the preceding paragraphs 62 - 70, characterized in that, during the steam explosion, the pressure expands to above 5 bar absolute, and preferably to above 4 bar absolute.
72.- Process as in any one of the preceding paragraphs 62 - 71, characterized in that, during the steam explosion, the pressure expands in less than 60 seconds, more preferably expands in less than 30 seconds, more preferably in less than 20 seconds, more preferably in less than 15 seconds, more preferably in less than 10 seconds, more preferably in less than 5 seconds, more preferably in less than 2 seconds, more preferably in less than 0.5 seconds.
73.- Process as in any one of the preceding paragraphs 62 - 72, characterized in that, during the steam explosion, the pressure expands in at least 15 seconds, preferably in at least 20 seconds, and preferably in at least 30 seconds.
74.- Process as in any one of the preceding paragraphs, characterized in that, in the step of reducing the pressure, the ratio of the pressure drop to the duration of the reduction of the pressure is greater than 0.25 bar/second, and preferably greater than 0.3 bar/second, more preferably greater than 0.5 bar/second.
75.- Process as in any one of the preceding paragraphs, characterized in that between 0.1 kg of steam and 1 kg of steam is consumed per kg of recycled wood fibers produced.
76.- Process as in any one of the preceding paragraphs, characterized in that one or more parameters are measured during the process, wherein the process can be adjusted as a function of these measured parameters.
77.- Process for the production of recycled wood fibers,
   wherein the process comprises the step in which refined material from recycled wood fiberboards - preferably from recycled MDF or HDF boards - is wetted, heated and pressurized using steam;
   wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
   wherein, after this pressure reduction, the material is transformed into recycled wood fibers, possibly with a fraction of wood fiber clumps and any other impurities.
78.- Process for the production of a wood fiber-comprising element,
   wherein the process comprises the step in which refined material from recycled wood fiber-comprising elements - preferably from recycled wood fiberboards - is wetted, heated and pressurized using steam;
   wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
   wherein, after this pressure reduction, the material is transformed into recycled wood fibers, possibly with a fraction of wood fiber clumps and any other impurities;
   wherein this process comprises the step of supplying the recycled wood fibers as feedstock in a production line - for example in a dry production process - for producing wood fiber-comprising elements.
79.- Process for the production of a cellulose-containing element, preferably a board such as a chipboard, wherein the process comprises the step in which refined material from recycled cellulose-containing elements - preferably from recycled chipboards - is wetted, heated and pressurized using steam;
   wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
   wherein, after this pressure reduction, the material is transformed into recycled cellulose-containing components, possibly with a fraction of clumps and any other impurities;
   wherein this process comprises the step of supplying the recycled cellulose-containing components as feedstock in a production line - for example in a dry production process - for producing cellulose-containing elements.
80.- Process as in paragraph 79, wherein the cellulose-containing element is a chipboard comprising at least three layers, namely two outer layers and at least one central layer, wherein the refined material from recycled cellulose-containing elements is refined material from recycled chipboards and the recycled cellulose-containing elements formed are recycled wood chips.

## Claims

1. Process for the production of a wood fiberboard, preferably for the production of an MDF or HDF board,
wherein the process comprises the step in which refined material from recycled wood fiberboards - preferably from recycled MDF or HDF boards - is wetted, heated and pressurized using steam;
wherein the process comprises the step in which this material is kept under pressure and temperature for a certain amount of time, followed by the step of reducing the pressure of this material by at least 3 bar, and preferably by at least 5 bar, more preferably by at least 7 bar; more preferably by at least 10 bar, more preferably by at least 11 bar;
wherein, after this pressure reduction, the material is transformed into recycled wood fibers, possibly with a fraction of wood fiber clumps and any other impurities;
wherein this process comprises the step of supplying the recycled wood fibers as feedstock in a production line - preferably in a dry production process - for producing wood fiberboard, preferably for producing MDF or HDF boards;
wherein one or more parameters are measured during the process, wherein the process can be adjusted as a function of these measured parameters.

2. Process as in claim 1, wherein the parameters which are measured during the process are chosen from the list of: parameters of the recycled wood fiberboards, parameters of the refined material from recycled wood fiberboards, process parameters, parameters of the recycled wood fibers, parameters relating to the wood fiber clumps, environmental parameters.

3. Process as in claim 1 or 2, wherein at least parameters of the recycled wood fiberboards are measured during the process, wherein said parameters can be the moisture content and/or the type of recycled wood fiberboard.

4. Process as in any of the preceding claims, wherein at least parameters of the refined material from recycled wood fiberboards are measured during the process, wherein said parameters can be the moisture content, the maximum/minimum/average particle size, the maximum/minimum/average particle weight and/or the homogeneity.

5. Process as in any of the preceding claims, wherein at least process parameters are measured during the process, wherein said parameters can be the temperature, the pressure, the time, the quantity of condensate formed and/or the quantity of ammonia formed during the process.

6. Process as in any of the preceding claims, wherein at least parameters of the recycled wood fibers are measured during the process, wherein said parameters can be the moisture content and/or the average fiber length.

7. Process as in any of the preceding claims, wherein at least parameters relating to the wood fiber clumps are measured during the process, wherein said parameters can be the percentage of wood fiber clumps, the maximum/minimum/average size of the wood fiber clumps, and/or the maximum/minimum/average weight of the wood fiber clumps.

8. Process as in any of the preceding claims, wherein at least environmental parameters are measured during the process, said parameters can be the temperature, the air humidity and/or the air pressure.

9. Process as in any of the preceding claims, wherein at least the process parameters are optionally adjusted as a function of these measured parameters.

10. Process as in any of the preceding claims, wherein the recycled wood fiberboards are subjected to a processing step in advance, if the measured parameters are not desirable, for example, if the measured moisture level is too high, it is possible to opt to employ an additional drying step.

11. Process as in any of the preceding claims, wherein the moisture content of the recycled wood fibers is measured continuously or periodically using a measuring device, in which case on the basis of the obtained results measured by the measuring device, water may or may not be added to the process to change the moisture content.

12. Process as in claim 11, wherein the desired range of the moisture content of the recycled wood fibers is between 10 and 13 percent by weight, preferably between 11 and 12 percent by weight.

13. Process as in any of the preceding claims, wherein the refined material from recycled wood fiberboards is separated into fractions on the basis of size and/or weight, wherein the process parameters are adapted to the fraction of refined material introduced.

14. Process as in any of the preceding claims, wherein after the step of reducing the pressure of the material, this material is subjected to another step in which the material is mechanically refined, preferably due to the fact that the material is treated by means of one or more rolls provided with pins or teeth.

15. Process as in any of the preceding claims, wherein for the step of separating off wood fiber clumps and any other impurities from the transformed material, use is made of one or more of a sieving operation, a wind sifter, a zigzag sifter, a cyclone or a 3D sieve.
